# EUROPEAN PATENT APPLICATION

(11) **EP 4 498 717 A1**
(43) Date of publication of application: **29.01.2025**
(21) Application number: 23792152.3
(22) Date of filing: 18.04.2023
(51) Int. Cl.: H04W 8/00, H04W 88/04, H04W 92/18

(54) **DEVICE AND METHOD FOR SUPPORTING SIDELINK RELAY DISCOVERY IN WIRELESS COMMUNICATION SYSTEM**

(30) Priority: 18.04.2022 KR 20220047396; 03.11.2022 KR 20220145296
(71) Applicant: Samsung Electronics Co., Ltd, Suwon-si, Gyeonggi-do 16677 (KR)
(72) Inventor: KANG, Hyunjeong, Suwon-si Gyeonggi-do 16677 (KR); SHARIAT, Mehrdad, Staines Middlesex TW18 4QE (GB)
(74) Representative: Nederlandsch Octrooibureau
(86) International application number: PCT/KR2023/005238
(87) International publication number: WO 2023/204576

(57) **Abstract**

The present disclosure relates to a 5G or 6G communication system for supporting a higher data transmission rate. A method performed by a first user equipment (UE) in a wireless communication system may comprise the steps of: transmitting, through a signaling radio bearer (SRB), a first message for discovering a UE-to-UE (U2U) sidelink relay for sidelink communication between a first UE and a second UE; receiving, from the U2U sidelink relay, a second message as a response to the first message; and establishing a sidelink connection with the second UE through the U2U sidelink relay based on the second message.

## Description

### [Technical Field]

The disclosure relates to a wireless communication system and, more particularly, to a device and a method for transmitting and receiving a sidelink relay discovery message when performing communication between remote UEs or between a remote UE and a network via a sidelink relay in a wireless communication system.

### [Background Art]

5G mobile communication technologies define broad frequency bands to enable high transmission rates and new services, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (e.g., 95GHz to 3THz bands) in order to accomplish transmission rates fifty times faster than 5G mobile communication technologies and ultra-low latencies one-tenth of 5G mobile communication technologies.

At the beginning of 5G mobile communication technologies, in order to support services and to satisfy performance requirements in connection with enhanced Mobile BroadBand (eMBB), Ultra Reliable & Low Latency Communications (URLLC), and massive Machine-Type Communications (mMTC), there has been ongoing standardization regarding beamforming and massive MIMO for alleviating radio-wave path loss and increasing radio-wave transmission distances in mmWave, numerology (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large-capacity data transmission and a polar code for highly reliable transmission of control information, L2 pre-processing, and network slicing for providing a dedicated network customized to a specific service.

Currently, there are ongoing discussions regarding improvement and performance enhancement of initial 5G mobile communication technologies in view of services to be supported by 5G mobile communication technologies, and there has been physical layer standardization regarding technologies such as Vehicle-to-everything (V2X) for aiding driving determination by autonomous vehicles based on information regarding positions and states of vehicles transmitted by the vehicles and for enhancing user convenience, New Radio Unlicensed (NR-U) aimed at system operations conforming to various regulation-related requirements in unlicensed bands, NR UE Power Saving, Non-Terrestrial Network (NTN) which is UE-satellite direct communication for securing coverage in an area in which communication with terrestrial networks is unavailable, and positioning.

Moreover, there has been ongoing standardization in wireless interface architecture/protocol fields regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service fields regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

If such 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with extended Reality (XR) for efficiently supporting Augmented Reality (AR), Virtual Reality (VR), Mixed Reality (MR), etc., 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for securing coverage in terahertz bands of 6G mobile communication technologies, Full Dimensional MIMO (FD-MIMO), multi-antenna transmission technologies such as array antennas and large-scale antennas, metamaterial-based lenses and antennas for improving coverage of terahertz band signals, high-dimensional space multiplexing technology using Orbital Angular Momentum (OAM), and Reconfigurable Intelligent Surface (RIS), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

### [Disclosure of Invention]

### [Technical Problem]

The disclosure may provide a method for transmitting and receiving, and processing a sidelink relay discovery message when a UE performs communication with another UE via a sidelink relay in a wireless communication system.

The technical subjects pursued in the disclosure may not be limited to the above-mentioned technical subjects, and other technical subjects which are not mentioned may be clearly understood from the following descriptions by those skilled in the art to which the disclosure pertains.

### [Solution to Problem]

According to an embodiment, a method performed by a first user equipment (UE) in a wireless communication system may include transmitting a first message for discovering a UE-to-UE (U2U) sidelink relay for sidelink communication between the first UE and a second UE via a signaling radio bearer (SRB), receiving, from the U2U sidelink relay, a second message as a response to the first message, and establishing a sidelink connection with the second UE via the U2U sidelink relay, based on the second message.

According to an embodiment, a first user equipment (UE) in a wireless communication system may include a transceiver and a controller coupled with the transceiver. The controller may be configured to transmit a first message for discovering a UE-to-UE (U2U) sidelink relay for sidelink communication between the first UE and a second UE via a signaling radio bearer (SRB), receive, from the U2U sidelink relay, a second message as a response to the first message, and establish a sidelink connection with the second UE via the U2U sidelink relay, based on the second message.

According to an embodiment, a method performed by a user equipment (UE)-to-UE (U2U) sidelink relay in a wireless communication system may include receiving a first message for discovering the U2U sidelink relay for sidelink communication between a first UE and a second UE via a signaling radio bearer (SRB), transmitting a second message as a response to the first message from the first UE, and relaying the sidelink communication between the first UE and the second UE, based on the second message.

According to an embodiment, a user equipment (UE)-to-UE (U2U) sidelink relay in a wireless communication system may include a transceiver and a controller coupled with the transceiver. The controller may be configured to receive a first message for discovering the U2U sidelink relay for sidelink communication between a first UE and a second UE via a signaling radio bearer (SRB), transmit a second message as a response to the first message from the first UE, and relay the sidelink communication between the first UE and the second UE, based on the second message.

### [Advantageous Effects of Invention]

According to an embodiment of the disclosure, it is possible to effectively provide a service for a UE through a sidelink relay in a wireless communication system and to extend service coverage.

Advantageous effects obtainable from the disclosure may not be limited to the above - mentioned effects, and other effects which are not mentioned may be clearly understood from the following descriptions by those skilled in the art to which the disclosure pertains.

### [Brief Description of Drawings]

FIG. 1A illustrates a wireless communication system according to an embodiment of the disclosure;
FIG 1B illustrates a wireless communication system according to an embodiment of the disclosure;
FIG. 2 illustrates the configuration of a base station in a wireless communication system according to an embodiment of the disclosure;
FIG. 3 illustrates the configuration of a relay or a UE in a wireless communication system according to an embodiment of the disclosure;
FIG. 4 illustrates the configuration of a communication unit in a wireless communication system according to an embodiment of the disclosure;
FIG. 5 illustrates the structure of a time-frequency resource in a wireless communication system according to an embodiment of the disclosure;
FIG. 6 illustrates signal flow between a remote UE and a sidelink relay transmitting and receiving a sidelink relay discovery message between the remote UE and another remote UE according to an embodiment of the disclosure;
FIG. 7 illustrates signal flow between a remote UE and a sidelink relay transmitting and receiving a sidelink relay discovery message between the remote UE and another remote UE according to an embodiment of the disclosure;
FIG. 8 illustrates an operation in which a remote UE and a sidelink relay transmit a sidelink relay discovery message between the remote UE and another remote UE according to an embodiment of the disclosure;
FIG. 9 illustrates an operation in which a remote UE and a sidelink relay receive a sidelink relay discovery message between the remote UE and another remote UE according to an embodiment of the disclosure; and
FIG. 10 illustrates transmission and/or reception of a side link relay discovery message according to an embodiment.

### [Mode for the Invention]

Hereinafter, exemplary embodiments of the disclosure will be described in detail in conjunction with the accompanying drawings. It should be noted that, in the accompanying drawings, the same or like elements are designated by the same or like reference signs as much as possible. Also, a detailed description of known functions or configurations that may make the subject matter of the disclosure unnecessarily unclear will be omitted.

In describing the embodiments in the specification, descriptions related to technical contents well-known in the relevant art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Furthermore, the size of each element does not completely reflect the actual size. In the respective drawings, the same or corresponding elements are assigned the same reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the "unit" refers to a software element or a hardware element, such as a Field Programmable Gate Array (FPGA) or an Application Specific Integrated Circuit (ASIC), which performs a predetermined function. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card.

The following detailed description of embodiments of the disclosure is mainly directed to New RAN (NR) as a radio access network and Packet Core (5G system or 5G core network or next generation core (NG Core)) as a core network in the 5G mobile communication standards specified by the 3rd generation partnership project (3GPP) that is a mobile communication standardization group, but based on determinations by those skilled in the art, the main idea of the disclosure may be applied to other communication systems having similar backgrounds through some modifications without significantly departing from the scope of the disclosure.

In the 5G system, a network data collection and analysis function (NWDAF), which is a network function for analyzing and providing data collected in a 5G network, may be defined to support network automation. The NWDAF may collect/store/analyze information from the 5G network and provide the results to unspecified network functions (NFs), and the analysis results may be used independently in each NF.

In the following description, some of terms and names defined in the 3GPP standards (standards for 5G, NR, LTE, or similar systems) may be used for the sake of descriptive convenience. However, the disclosure is not limited by these terms and names, and may be applied in the same way to systems that conform other standards.

Hereinafter, the disclosure relates to a method and a device for transmitting and receiving a sidelink relay discovery message for a remote UE to discover a sidelink relay in a wireless communication system. The disclosure provides a method and a device for processing, and transmitting and receiving a relay discovery message to discover a sidelink relay when a remote UE performs communication with another remote UE through a sidelink relay in a wireless communication system.

Specifically, the disclosure provides a method in which a sidelink relay or a remote UE configures a relay discovery message between a remote UE and a remote UE and transmits the relay discovery message through a radio bearer configured for the relay discovery message between the remote UE and the remote UE. The disclosure provides a method in which a sidelink relay or a remote UE receives a relay discovery message by using a radio bearer configured for the relay discovery message between a remote UE and a remote UE. According to embodiments of the disclosure, a UE may extend the service coverage of direct communication with another UE, may increase the reliability of data transmission and reception, and may minimize the battery usage of the UE through a sidelink relay.

In the following description, terms referring to signals, terms referring to channels, terms referring to control information, terms referring to network entities, terms referring to device elements, and the like are illustratively used for the sake of descriptive convenience. Therefore, the disclosure is not limited by the terms as used herein, and other terms referring to subjects having equivalent technical meanings may be used.

In the following description, a base station is an entity that allocates resources to terminals, and may be at least one of a gNode B, an eNode B, a Node B, a base station (BS), a wireless access unit, a base station controller, and a node on a network. A terminal may include a user equipment (UE), a mobile station (MS), a cellular phone, a smartphone, a computer, or a multimedia system capable of performing a communication function. However, they are merely examples thereof, and the base station and the terminal are not limited to these examples. In the disclosure, the term "eNB" may be interchangeably used with the term "gNB" for the sake of descriptive convenience. That is, a base station described as "eNB" may refer to "gNB". In the disclosure, the term "terminal" may refer to not only mobile phones, NB-IoT devices, and sensors, but also various wireless communication devices.

In the following description, the terms "physical channel" and "signal" may be interchangeably used with the term "data" or "control signal". For example, the term "physical downlink shared channel (PDSCH)" refers to a physical channel over which data is transmitted, but the PDSCH may also be used to refer to the "data". That is, in the disclosure, the expression "transmit ting a physical channel" may be construed as having the same meaning as the expression "transmitting data or a signal over a physical channel."

In the following description of the disclosure, upper signaling refers to a signal transfer scheme from a base station to a terminal via a downlink data channel of a physical layer, or from a terminal to a base station via an uplink data channel of a physical layer. The upper signaling may also be understood as radio resource control (RRC) signaling or a media access control (MAC) control element (CE).

Furthermore, as used in the disclosure, the expression "greater than" or "less than" is used to determine whether a specific condition is satisfied or fulfilled, but this is intended only to illustrate an example and does not exclude "greater than or equal to" or "equal to or less than". A condition indicated by the expression "greater than or equal to" may be replaced with a condition indicated by "greater than", a condition indicated by the expression "equal to or less than" may be replaced with a condition indicated by "less than", and a condition indicated by "greater than and equal to or less than" may be replaced with a condition indicated by "greater than and less than".

Furthermore, the embodiments of the disclosure will be described using terms employed in some communication standards (e.g., the 3rd generation partnership project (3GPP)), but they are for illustrative purposes only. The embodiments of the disclosure may be easily applied to other communication systems through modifications.

Also, device-to-device direct communication (sidelink communication) using the 5G communication system has been studied, and it is expected that the sidelink communication may be applied to vehicle communication (vehicle-to everything, hereinafter "V2X") and public safety networks to provide various services to users.

In particular, there is a need for sidelink relay utilization schemes which can support service coverage extensions, data transfer reliability increases, and terminal power consumption reductions.

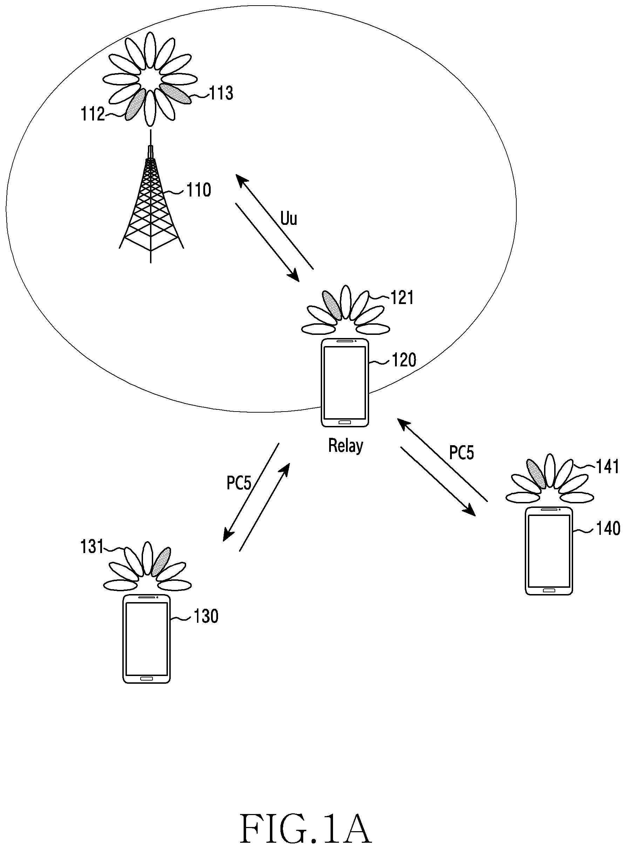

FIG. 1A illustrates a wireless communication system according to an embodiment of the disclosure.

FIG. 1A illustrates a base station 110, UEs 130 and 140, and a sidelink relay 120 capable of relaying data transmission and reception between the base station and the UEs as some nodes using a wireless channel in the wireless communication (or mobile communication system). For example, the sidelink relay corresponds to a UE-to-network (U2N) relay. Although FIG. 1A shows only one base station, another base station the same as or similar to the base station 110 may be further included.

According to an embodiment, the base station 110 is a piece of network infrastructure that provides wireless access for the UEs 130 and 140 and the relay 120. The base station 110 has coverage defined as a certain geographic area based on the distance over which the base station 110 may transmit a signal. The base station 110 may be referred to as an access point (AP), an eNodeB (eNB), a 5th-generation (5G) node, a next-generation nodeB (gNB), a wireless point, a transmission/reception point (TRP), or other terms with equivalent technical meanings, in addition to a base station.

According to an embodiment, the relay 120 is a device used by a user or a piece of network infrastructure, and may perform communication with the base station 110 through a wireless channel. For example, a link from the base station 110 to the relay 120 may be referred to as a downlink (DL), and a link from the relay 120 to the base station 110 may be referred to as an uplink (UL). The base station 110 and the relay 120 may be connected through a Uu interface. The uplink (UL) refers to a wireless link through which the relay 120 transmits data or a control signal to the base station 110, and the downlink (DL) refers to a wireless link through which the base station 110 transmits data or a control signal to the relay 120.

According to an embodiment, the relay 120 may perform communication with the UE 130 and the UE 140 through a wireless channel. For example, a link between the relay 120 and the UE 130 and a link between the relay 120 and the UE 140 are referred to as sidelinks, and the sidelinks may also be referred to as PC5 interfaces.

According to an embodiment, each of the UEs 130 and 140 is a device used by a user, and may perform communication with the base station 110 through the wireless channel or perform communication with a network through the relay 120 and the wireless channel. The disclosure shows only that each of the UE 130 and the UE 140 performs communication through a wireless channel with the relay 120. At least one of the UE 130 and the UE 140 may be operated without the user's involvement. That is, at least one of the UE 130 and the UE 140 may be a device performing machine-type communication (MTC), and may not be carried by the user. Each of the UE 130 and the UE 140 may be referred to as a user equipment (UE), a mobile station, a subscriber station, a remote terminal, a wireless terminal, a user device, or other terms with equivalent technical meanings in addition to a terminal.

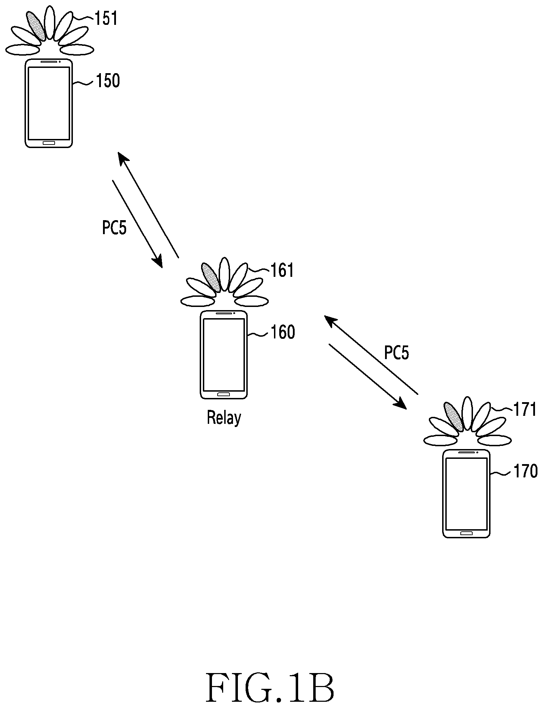

FIG 1B illustrates a wireless communication system according to an embodiment of the disclosure.

FIG. 1B illustrates the wireless communication system including UEs 150 and 170 and a sidelink relay 160 capable of relaying data transmission and reception between the UEs as some nodes using a wireless channel in the wireless communication system (or mobile communication system). For example, the sidelink relay 160 corresponds to a UE-to-UE (U2U) relay.

According to an embodiment, the relay 160 may perform communication with the UE 150 and the UE 170 through a wireless channel. A link between the relay 160 and the UE 150 and a link between the relay 160 and the UE 170 are referred to as sidelinks, and the sidelinks may also be referred to as PC5 interfaces.

According to an embodiment, each of the UE 150 and the UE 170 is an apparatus or device used by a user, and may perform direct communication through a wireless channel or perform communication with a counterpart UE through the relay 160 and the wireless channel. A link between the UE 150 and the UE 170, the link between the UE 150 and the relay 160, and the link between the UE 170 and the relay 160 are referred to as sidelinks, and the sidelinks may also be referred to as PC5 interfaces.

According to an embodiment, at least one of the UE 150 and the UE 170 may be operated without the user's involvement. For example, at least one of the UE 150 and the UE 170 may be a device performing machine-type communication (MTC), and may not be carried by the user. Each of the UE 150 and the UE 170 may be referred to as a user equipment (UE), a mobile station, a subscriber station, a remote terminal, a wireless terminal, a user device, or other terms with equivalent technical meanings in addition to a terminal.

In the following description, a description of an uplink may be applied to a downlink, and a description of the downlink may be applied to the uplink. In another example, a Uu interface, a sidelink, and a PC-5 may be interchangeably used. That is, a description of the Uu interface may be referenced for a description of the sidelink and/or the PC-5, and a description of the sidelink may be referenced for a description of the Uu interface and/or the PC-5.

For example, the Uu interface may be referenced as an interface between a UE and a base station (e.g., an eNoB), and PC-5 may be referenced as a communication technology for vehicle-to-vehicle (V2V) and/or V2X data transmission.

The base station 110, the relays 120 and 160, and/or the UEs 130, 140, 150, and 170 illustrated in FIG. 1A and FIG. 1B may transmit and receive radio signals in a millimeter wave (mmWave) band (e.g., 28 GHz, 30 GHz, 38 GHz, and 60 GHz). Here, in order to improve channel gain, the base station 110, and/or the relays 120 and 160, and the UEs 130, 140, 150, and 170 may perform beamforming. The beamforming may include transmission beamforming and reception beamforming. For example, the base station 110, the relays 120 and 160, and the UEs 130, 140, 150, and 170 may assign directivity to a transmission signal or a reception signal.

According to an embodiment, the base station 110, the relays 120 and 160, and the UEs 130, 140, 150, and 170 may select serving 112, 113, 121, 131, 141, 151, 161, and 171 through a beam search procedure or a beam management procedure. After the serving beams 112, 113, 121, 131, 141, 151, 161, and 171 are selected, communication may be performed through resources that are in a quasi co-located (QCL) relationship with resources used to transmit the serving beams 112, 113, 121, 131, 141, 151, 161, and 171.

According to an embodiment, when large-scale characteristics (or QCL relationship-associated characteristics) of a channel carrying a symbol on a first antenna port may be inferred from a channel carrying a symbol on a second antenna port, the first antenna port and the second antenna port may be said to be in a QCL relationship. For example, the large-scale characteristics may include at least one of a delay spread, a Doppler spread, a Doppler shift, an average gain, an average delay, and a spatial receiver parameter.

According to an embodiment, the UE 130, the UE 140, the UE 150, and/or the UE 170 illustrated in FIG. 1A and FIG. 1B may support vehicle communication. For vehicle communication, in an LTE system, standardization of a vehicle-to-everything (V2X) technology based on a device-to-device (D2D) communication architecture has been completed in 3GPP Release 14 and Release 15, and standardization of a V2X technology based on 5G NR has been completed in 3GPP Release 16. NR V2X supports unicast communication between UEs, groupcast (or multicast) communication, and broadcast communication. Further, unlike LTE a V2X aimed at transmitting and receiving basic safety information required to drive a vehicle on the road, NR V2X is aimed at providing more advanced services, such as platooning, advanced driving, an extended sensor, and remote driving. V2X services may be divided into a basic safety service and an advanced service. The basic safety service may include detailed services, such as a vehicle notification (cooperative awareness message (CAM) or basic safety message (BSM)) service, a left turn notification service, a rear-end collision warning service, an emergency vehicle approach notification service, a forward obstacle warning service, and an intersection signal information service, and may transmit and receive V2X information by using broadcast, unicast, or groupcast transmission methods. The advanced service not only has stronger quality-of-service (QoS) requirements than the basic safety service but also requires a method for transmitting and receiving V2X information using unicast and groupcast transmission methods in addition to a broadcast method so that V2X information may be transmitted and received within a specific vehicle group or between two vehicles. The advanced service may include detailed services, such as a platooning service, an autonomous driving service, a remote driving service, and an extended sensor-based V2X service. In addition, NR V2X may provide a public safety service by supporting a direct communication service between UEs in an area where there is no network infrastructure.

Hereinafter, a sidelink (SL) refers to a transmission and reception path for a signal between UEs or a transmission and reception path for a signal between a UE and a relay, and may be used interchangeably with a PC5 interface. Hereinafter, a base station is an entity that allocates a resource for a UE and a relay, and may be a base station supporting both V2X communication and general cellular communication or a base station supporting only V2X communication. That is, a base station may refer to an NR base station (e.g., a gNB), an LTE base station (e.g., an eNB), or a roadside unit (RSU). A UE may include not only a general user equipment and a mobile station but also a vehicle supporting vehicle-to-vehicle (V2V) communication, a vehicle supporting vehicle-to-pedestrian (V2P) communication, a handset (e.g., a smartphone) of a pedestrian, a vehicle supporting vehicle-to-network (V2N) communication, a vehicle supporting vehicle-to-infrastructure (V2I) communication, an RSU having a UE function, an RSU having a base station function, or an RSU having part of a base station function and part of a UE function.

In the disclosure, a UE may refer to a vehicle supporting vehicle-to-vehicle (V2V) communication, a vehicle supporting vehicle-to-pedestrian (V2P) communication, a handset (e.g., a smartphone) of a pedestrian, a vehicle supporting vehicle-to-network (V2N) communication, or a vehicle supporting vehicle-to-infrastructure (V2I) communication. A UE may refer to a user device supporting communication between devices of a public safety network.

Further, in the disclosure, a UE may refer to a roadside unit (RSU) having a UE function, an RSU having a base station function, or an RSU having part of a base station function and part of a UE function.

In the disclosure, a relay may refer to a vehicle supporting V2X communication or a user device supporting communication between devices of a public safety network. Further, in the disclosure, a relay may refer to a device having a UE function, a device having a base station function, or a device having part of a UE function and part of a base station function.

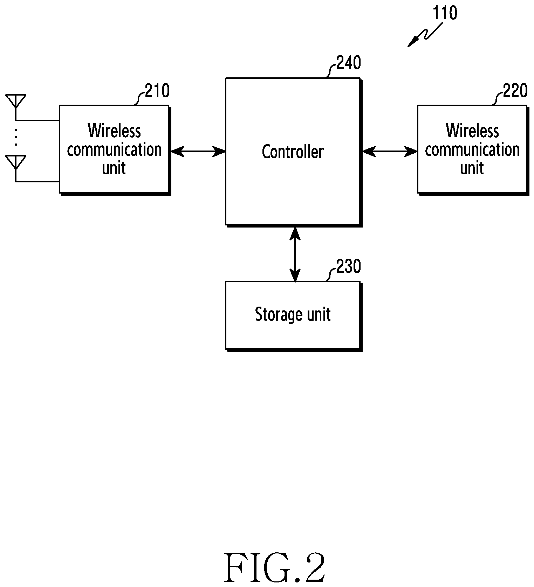

FIG. 2 illustrates the configuration of a base station in a wireless communication system according to an embodiment of the disclosure.

The configuration illustrated in FIG. 2 may be construed as the configuration of a base station (e.g., 110 of FIG. 1A). The terms 'unit', '-or/er', and the like used herein indicate a unit for processing at least one function or operation, which may be implemented as hardware, software, or a combination thereof.

Referring to FIG. 2, the base station 110 may include a wireless communication unit 210, a backhaul communication unit 220, a storage unit 230, and/or a controller 240. However, components of the base station 110 are not limited to the foregoing examples. For example, the base station may include more components or fewer components than that of the foregoing components. In addition, the wireless communication unit 210, the backhaul communication unit 220, the storage unit 230, and/or the controller 240 may be configured as a single chip. The controller 240 may include one or more processors. For example, the base station 110 may include a transceiver and a controller coupled with the transceiver. In another example, the base station 110 may include at least one transceiver and at least one processor coupled with the at least one transceiver. In still another example, the base station 110 may include a memory that stores instructions executed by a controller, a transceiver, and the controller.

According to an embodiment, the wireless communication unit 210 may perform functions for transmitting and/or receiving a signal through a wireless channel. For example, the wireless communication unit 210 may perform a function of conversion between a baseband signal and a bit stream according to the physical-layer specification of a system. For example, in data transmission, the wireless communication unit 210 may encode and modulate a transmitted bit stream to generate complex symbols. Further, in data reception, the wireless communication unit 210 may demodulate and decode a baseband signal to reconstruct a received bit stream. For example, the wireless communication unit 210 may be replaced with a transceiver, a receiver, and/or a transmitter.

According to an embodiment, the wireless communication unit 210 upconverts a baseband signal into a radio-frequency (RF) band signal to transmit the RF band signal through an antenna, and downconverts an RF band signal received through the antenna into a baseband signal. To this end, the wireless communication unit 210 may include a transmission filter, a reception filter, an amplifier, a mixer, an oscillator, a digital-to-analog converter (DAC), an analog-to-digital converter (ADC), or the like. Further, the wireless communication unit 210 may include a plurality of transmission/reception paths. In addition, the wireless communication unit 210 may include at least one antenna array including a plurality of antenna elements.

According to an embodiment, from the aspect of hardware, the wireless communication unit 210 may include a digital unit and an analog unit, and the analog unit may include a plurality of sub-units according to operating power, operating frequency, or the like. The digital unit may be configured as at least one processor (e.g., a digital signal processor (DSP)).

According to an embodiment, as described above, the wireless communication unit 210 transmits and receives a signal. Accordingly, part or the entirety of the wireless communication unit 210 may be referred to as a transmitter, a receiver, or a transceiver. In the following description, transmission and reception performed through a wireless channel are construed as including processing performed as described above by the wireless communication unit 210.

According to an embodiment, the backhaul communication unit 220 may provide an interface for communication with other nodes in a network. That is, the backhaul communication unit 220 may convert a bit stream transmitted from the base station 110 to another node, for example, another access node, another base station, a higher node, or a core network, into a physical signal, and may convert a physical signal received from another node into a bit stream.

According to an embodiment, the storage unit 230 may store data, such as a default program, an application, and setting information, for the operation of the base station 110. The storage unit 230 may be configured as a volatile memory, a nonvolatile memory, or a combination of a volatile memory and a nonvolatile memory. The storage unit 230 may provide the stored data in response to a request from the controller 240.

According to an embodiment, the controller 240 may control the overall operation of the base station 110. For example, the controller 240 may transmit and receive a signal through the wireless communication unit 210 or the backhaul communication unit 220. Further, the controller 240 records and reads data in the storage unit 230. The controller 240 may perform functions of a protocol stack required by communication standards. According to another embodiment, the protocol stack may be included in the wireless communication unit 210. To this end, the controller 240 may include at least one processor. According to embodiments, the controller 240 may control the base station 110 to perform operations according to embodiments to be described below.

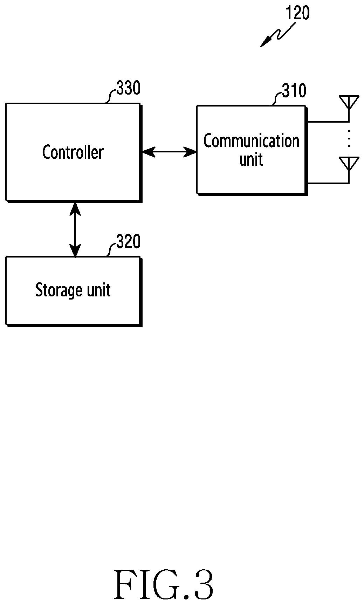

FIG. 3 illustrates the configuration of a relay or a UE in a wireless communication system according to an embodiment of the disclosure.

The configuration illustrated in FIG. 3 may be construed as the configuration of a relay (e.g., 120 of FIG. 1A) or a UE (e.g., 130 or 140 of FIG. 1A). The terms 'unit', '-or/er', and the like used herein indicate a unit for processing at least one function or operation, which may be implemented as hardware, software, or a combination thereof.

Referring to FIG. 3, the relay 120 or the UE 130 or 140 may include a communication unit 310, a storage unit 320, and/or a controller 330. However, components of the relay 120 or the UE 130 or 140 are not limited to the foregoing examples. For example, the relay 120 or the UE 130 or 140 may include more components or fewer components than that of the foregoing components. In addition, the communication unit 310, the storage unit 320, and/or the controller 330 may be configured as a single chip. The controller 330 may include one or more processors. For example, the UE 120 may include a transceiver and a controller coupled with the transceiver. In another example, the UE 120 may include at least one transceiver and at least one processor coupled with the at least one transceiver. In still another example, the UE 120 may include a memory that stores instructions executed by a controller, a transceiver, and the controller.

According to an embodiment, the communication unit 310 performs functions for transmitting and/or receiving a signal through a wireless channel. For example, the communication unit 310 may perform a function of converting between a baseband signal and a bit stream according to the physical-layer specification of a system. For example, in data transmission, the communication unit 310 encodes and modulates a transmitted bit stream to generate complex symbols. For example, in data reception, the communication unit 310 may demodulate and decode a baseband signal to reconstruct a received bit stream. The communication unit 310 may upconvert a baseband signal into an RF band signal to transmit the RF band signal through an antenna, and may downconvert an RF band signal received through the antenna into a baseband signal. For example, the communication unit 310 may include a transmission filter, a reception filter, an amplifier, a mixer, an oscillator, a DAC, an ADC, or the like.

According to an embodiment, the communication unit 310 may include a plurality of transmission/reception paths. In addition, the communication unit 310 may include at least one antenna array including a plurality of antenna elements. From the aspect of hardware, the communication unit 310 may include a digital circuit and an analog circuit (e.g., a radio frequency integrated circuit (RFIC)). Here, the digital circuit and the analog circuit may be configured as a single package. Further, the communication unit 310 may include a plurality of RF chains. The communication unit 310 may perform beamforming.

According to an embodiment, as described above, the communication unit 310 may transmit and receive a signal. Accordingly, part or the entirety of the communication unit 310 may be referred to as a transmitter, a receiver, or a transceiver. In the following description, transmission and reception performed through a wireless channel may be construed as including processing performed as described above by the communication unit 310.

According to an embodiment, the storage unit 320 may store data, such as a default program, an application, and setting information, for the operation of the relay 120 or the UE 130 or 140. The storage unit 320 may be configured as a volatile memory, a nonvolatile memory, or a combination of a volatile memory and a nonvolatile memory. The storage unit 320 provides the stored data in response to a request from the controller 330.

According to an embodiment, the controller 330 controls the overall operation of the relay 120 or the UE 130 or 140. For example, operations of the UE 120 to be described below with reference to FIG. 1 to FIG. 8 may be construed substantially as operations of the controller 330.

For example, the controller 330 may transmit and receive a signal through the communication unit 310. Further, the controller 330 records and reads data in the storage unit 320. The controller 330 may perform functions of a protocol stack required by communication standards. To this end, the controller 330 may include at least one processor or microprocessor, or may be configured as a part of a processor. Part of the communication unit 310 and the controller 330 may be referred to as a communication processor (CP). According to embodiments, the controller 330 may control the relay 120 or the UE 130 or 140 to perform operations according to embodiments to be described below.

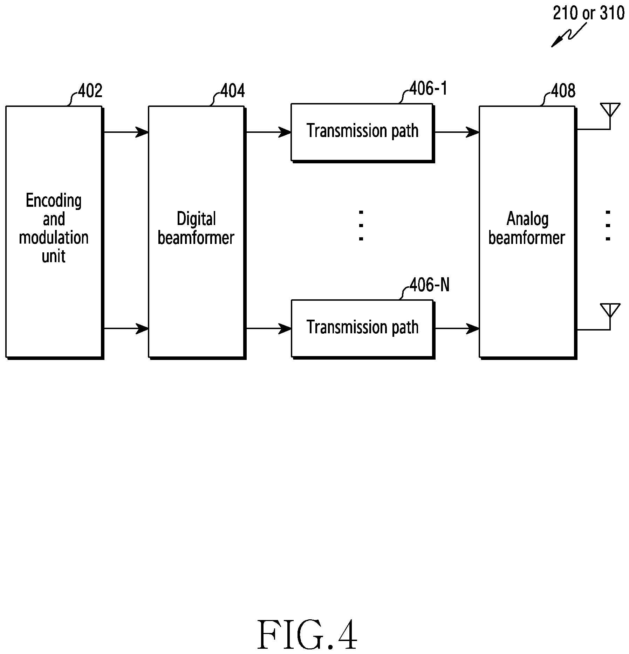

FIG. 4 illustrates the configuration of a communication unit in a wireless communication system according to an embodiment of the disclosure.

FIG. 4 illustrates an example of the detailed configuration of the wireless communication unit 210 of FIG. 2 or the communication unit 310 of FIG. 3. Specifically, FIG. 4 illustrates components for performing beamforming as parts of the wireless communication unit 210 of FIG. 2 or the communication unit 310 in FIG. 3.

Referring to FIG. 4, the wireless communication unit 210 or the communication unit 310 may include an encoding and modulation unit 402, a digital beamformer 404, a plurality of transmission paths 406-1 to 406-N, and/or an analog beamformer 408.

According to an embodiment, the encoding and modulation unit 402 may perform channel encoding. For channel encoding, at least one of low-density parity-check (LDPC) code, convolutional code, and polar code may be used. The encoding and modulation unit 402 generates modulation symbols by performing constellation mapping.

According to an embodiment, the digital beamformer 404 may perform beamforming on a digital signal (e.g., the modulation symbols). To this end, the digital beamformer 404 multiplies the modulation symbols by beamforming weights. Here, the beamforming weights are used to change the size and phase of a signal, and may be referred to as a 'precoding matrix', a 'precoder', or the like. The digital beamformer 404 may output the digital-beamformed modulation symbols to the plurality of transmission paths 406-1 to 406-N. Here, according to a multiple-input multiple-output (MIMO) transmission scheme, the modulation symbols may be multiplexed, or the same modulation symbols may be provided to the plurality of transmission paths 406-1 to 406-N.

FIG. 4 of the disclosure shows that the wireless communication unit 210 or the communication unit 310 includes the encoding and modulation unit 402, which is only for illustration. For example, the controller 240 and/or the controller 330 may include the encoding and modulation unit 402.

The plurality of transmission paths 406-1 to 406-N may convert the digital-beamformed digital signals into analog signals. To this end, each of the plurality of transmission paths 406-1 to 406-N may include an inverse fast Fourier transform (IFFT) operation unit, a cyclic prefix (CP) inserter, a DAC, and an upconverter. The CP inserter is for an orthogonal frequency division multiplexing (OFDM) scheme, and may be excluded when another physical layer scheme (e.g., filter bank multicarrier (FBMC)) is applied. That is, the plurality of transmission paths 406-1 to 406-N may provide independent signal processing processes for a plurality of streams generated through digital beamforming. However, some components of the plurality of transmission paths 406-1 to 406-N may be used in common depending on the implementation scheme.

The analog beamformer 408 may perform beamforming on the analog signals. To this end, the digital beamformer 404 may multiply the analog signals by beamforming weights. Here, the beamforming weights are used to change the size and phase of a signal. Specifically, the analog beamformer 440 may be variously configured depending on the connection structure between the plurality of transmission paths 406-1 to 406-N and antennas. For example, each of the plurality of transmission paths 406-1 to 406-N may be connected to one antenna array. In another example, the plurality of transmission paths 406-1 to 406-N may be connected to one antenna array. In still another example, the plurality of transmission paths 406-1 to 406-N may be adaptively connected to one antenna array or may be connected to two or more antenna arrays.

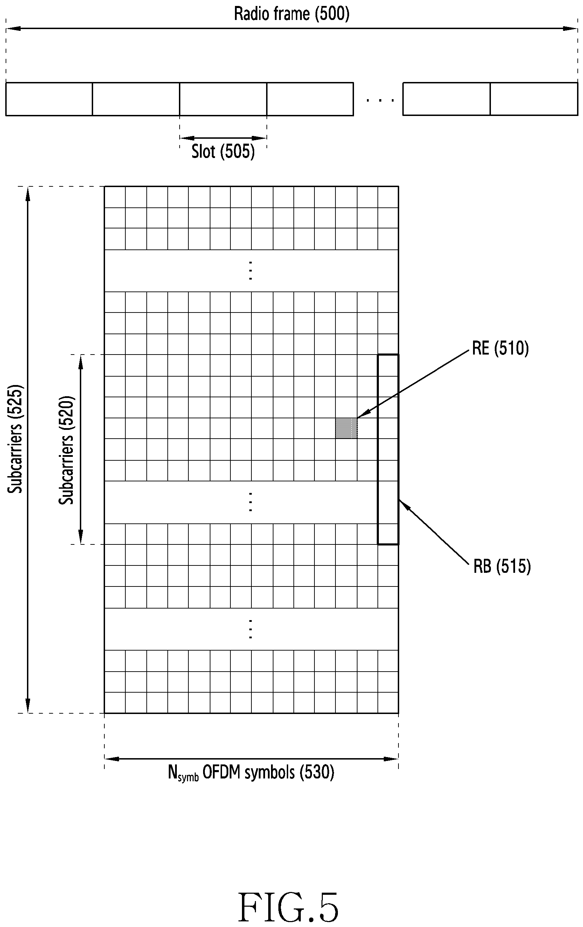

FIG. 5 illustrates the structure of a time-frequency resource in a wireless communication system according to an embodiment of the disclosure.

Referring to FIG. 5, in a radio resource region, a horizontal axis denotes a time domain, and a vertical axis denotes a frequency domain. A minimum transmission unit in the time domain is an OFDM symbol or a DFT-S-OFDM symbol, and Nsymb OFDM symbols or DFT-S-OFDM symbols 530 may be included in one slot 505. Unlike a slot, the length of a subframe in an NR system may be defined as 1.0 ms, and the length of a radio frame 500 may be defined as 10 ms. A minimum transmission unit in the frequency domain is a subcarrier, and the bandwidth of the entire system transmission bandwidth may include a total of NBW subcarriers 525. The specific values of Nsymb and NBW may be applied variably depending on a system.

According to an embodiment, a basic unit in a time-frequency resource domain is a resource element (RE) 510, and may be represented by an OFDM symbol index or a DFT-S-OFDM symbol index and a subcarrier index. A resource block (RB) 515 may be defined as NRB consecutive subcarriers 520 in the frequency domain. In general, the minimum transmission unit of data is an RB unit, and in the NR system, Nsymb = 14, NRB = 12.

According to an embodiment, the structure of the time-frequency resource illustrated in FIG. 5 may be applied to a Uu interface. Further, the structure of the time-frequency resource illustrated in FIG. 5 may be similarly applied to a sidelink.

According to an embodiment of the disclosure, a sidelink relay capable of relaying packet transmission and reception between a remote UE and another remote UE or packet transmission and reception between a remote UE and a network may be authenticated to be used for at least one of a specific service, a specific UE, a specific sidelink flow, a specific sidelink bearer, a specific unicast link, a specific source identifier, and a specific destination identifier. The sidelink relay may establish a direct connection with an authenticated UE at the time of installation. In an embodiment, the sidelink relay may transmit a sidelink relay discovery message, and may perform a procedure of establishing a direct sidelink connection with the authenticated UE. In another embodiment, the sidelink relay may receive a sidelink relay discovery message from an authenticated UE, may transmit a sidelink relay discovery message to the authenticated UE, and may perform a procedure of establishing a direct sidelink connection with the authenticated UE. The sidelink relay and the remote UE may support a sidelink relay between the remote UE and the network and/or support a sidelink relay between the remote UE and the other remote UE. In a case where the sidelink relay and the remote UE support both the sidelink relay between the remote UE and the network and the sidelink relay between the remote UE and the other remote terminal, when transmitting or receiving a sidelink relay discovery message, the relay discovery message may be configured and processed by distinguishing whether the sidelink relay discovery message is a relay discovery message for the sidelink relay between the remote UE and the network or a relay discovery message for the sidelink relay between the remote UE and the other remote UE. In various embodiments, the sidelink relay discovery message may be understood as a message transmitted between the sidelink relay and the UE to initiate a sidelink relay discovery procedure therebetween, and may include a message for discovery or a message for a request for discovery. Configuration information required for the sidelink relay UE and the sidelink remote UE to transmit or receive the sidelink relay discovery message may be obtained from the base station or be preconfigured.

According to an embodiment, a UE may be authenticated to use a direct sidelink connection in at least one of a specific service, a specific UE, a specific sidelink flow, a specific sidelink bearer, a specific unicast link, a specific source identifier, and a specific destination identifier. In an embodiment, the UE may transmit a sidelink discovery message to discover another UE capable of establishing a direct sidelink connection, and may perform a procedure of establishing a direct sidelink connection with an authenticated UE. In another embodiment, the UE may receive a sidelink discovery message from an authenticated UE, may transmit a sidelink discovery message to the authenticated UE, and may perform a procedure of establishing a direct sidelink connection with the authenticated UE.

According to an embodiment, in a relay discovery procedure for relaying packet transmission and reception between a remote UE and another remote UE or packet transmission and reception between the remote UE and a network, a transmission mode for transmitting a sidelink relay discovery message between the remote UE and a sidelink relay may be one of unicast, groupcast, and broadcast.

According to an embodiment, a remote UE communicating with a sidelink relay may maintain one of an RRC connected mode (RRC_CONNECTED state), an RRC idle mode (RRC_IDLE state), or an RRC inactive mode (RRC_INACTIVE state) with respect to a base station. The sidelink relay communicating with the remote UE may maintain one of the RRC connected mode (RRC_CONNECTED state), the RRC idle mode (RRC_IDLE state), or the RRC inactive mode (RRC_INACTIVE state) with respect to the base station. The sidelink relay and the remote UE may mutually serve as a transmitting UE and a receiving UE in direct sidelink communication, and may perform sidelink direct communication while maintaining one of the RRC connected mode, RRC idle mode, or RRC inactive mode with respect to the base station.

According to various embodiments of the disclosure, a sidelink relay discovery message used to discover a sidelink relay capable of a relay between a remote UE and another remote UE may include at least one of the following:
(1) PC5 relay discovery message; and
(2) Direct communication request (DCR) message with relay discovery indication. This message applies to a case where a DCR message transmitted to establish a sidelink-based direct connection between UEs is extended for discovering a sidelink relay, and may include information corresponding to a relay discovery indication when used for discovering a sidelink relay.

A remote UE and/or a sidelink relay may use (1) or (2) as a sidelink relay discovery message between the remote UE and another remote UE.

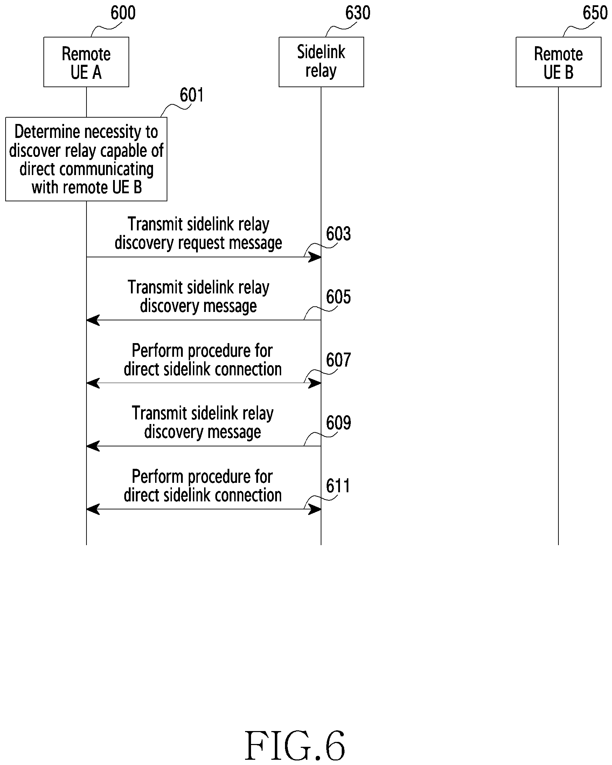

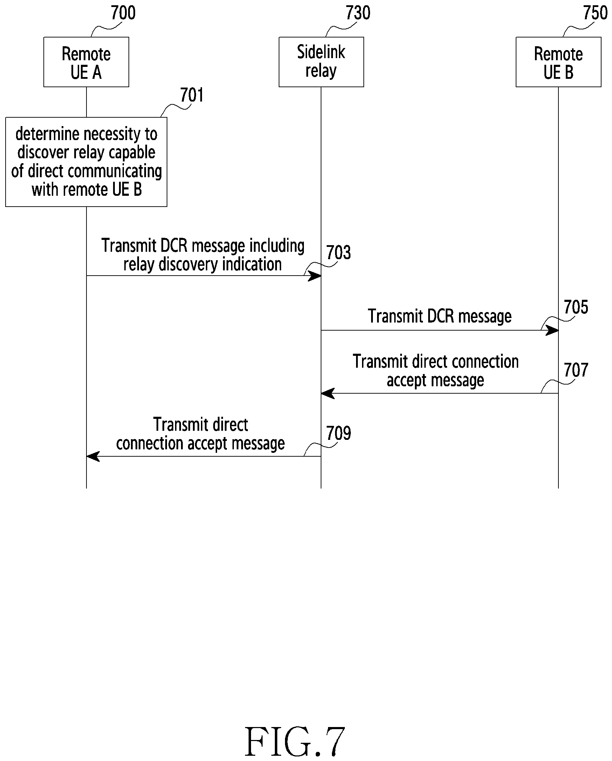

Next, an embodiment in which a remote UE and a sidelink relay use (1) as a sidelink relay discovery message with reference to FIG. 6 and an embodiment in which a remote UE and a sidelink relay use (2) as a sidelink relay discovery message with reference to FIG. 7 are described.

FIG. 6 illustrates signal flow between a remote UE and a sidelink relay transmitting and receiving a sidelink relay discovery message between the remote UE and another remote UE according to an embodiment of the disclosure.

Referring to FIG. 6, when remote UE A 600 according to an embodiment attempts to perform sidelink-based direct communication with remote UE B 650, remote UE A 600 may connect directly to remote UE B 650 or connect to remote UE B 650 through a relay of a sidelink relay 630 enabling a connection to remote UE B 650.

According to an embodiment, when remote UE A 600 determines that it is necessary to perform a procedure for discovering the sidelink relay 630 in operation 601, for example, when remote UE A 600 determines that a sidelink relay discovery message is not received from the sidelink relay 630, remote UE A 600 may transmit a sidelink relay discovery request message to discover the sidelink relay 630 (U2U relay discovery solicitation) in operation 603.

According to an embodiment, when receiving the sidelink relay discovery request message from remote UE A 600 and determining to be able to transmit a sidelink relay discovery message, the sidelink relay 630 may transmit a sidelink relay discovery message in operation 605 (U2U relay discovery). The sidelink relay discovery request message in operation 603 and the sidelink relay discovery message in operation 605 may correspond to PC5 relay discovery messages.

According to an embodiment, remote UE A 600 may receive the sidelink relay discovery message transmitted by the sidelink relay 630, may select the sidelink relay 630, and may perform a procedure for a direct sidelink connection with the selected sidelink relay 630 in operation 607 (Direct connection establishment). When remote UE A 600 determines that it is necessary to perform a procedure for discovering the sidelink relay 630, for example, remote UE A 600 may monitor and receive a sidelink relay discovery message transmitted by the sidelink relay 630 in operation 609 (U2U Relay discovery).

According to an embodiment, the sidelink relay discovery message transmitted by the sidelink relay 630 and received by remote UE A 600 in operation 609 may correspond to a PC5 relay discovery message. Remote UE A 600 may perform a procedure for a direct sidelink connection with the selected sidelink relay 630 in operation 611 (Direct connection establishment). Remote UE B 650 may perform a sidelink relay discovery procedure of operation 603 to operation 607 or a sidelink relay discovery procedure of operation 609 to operation 611. Remote UE A 600 and remote UE B 650 may perform sidelink-based direct communication through a relay of the sidelink relay 630.

FIG. 7 illustrates signal flow between a remote UE and a sidelink relay transmitting and receiving a sidelink relay discovery message between the remote UE and another remote UE according to an embodiment of the disclosure.

Referring to FIG. 7, when remote UE A 700 according to an embodiment attempts to perform sidelink-based direct communication with remote UE B 750, remote UE A 700 may connect directly to remote UE B 750 or connect to remote UE B 750 through a relay of a sidelink relay 730 enabling a connection to remote UE B 750.

According to an embodiment, in case that remote UE A 700 determines that it is necessary to perform a procedure for discovering the sidelink relay 730 enabling the connection with remote UE B 750 in operation 701, remote UE A 700 may include a relay discovery indication to a DCR message to be transmitted to remote UE B 759 and transmit the DCR message to the sidelink relay 730 in operation 703 (Direct connection request with relay discovery).

According to an embodiment, the DCR message with the relay discovery indication in operation 703 may correspond to a sidelink relay discovery message. When receiving the DCR message with the relay discovery indication, that is, the sidelink relay discovery message, from remote UE A 700 and determining to be able to perform a sidelink relay, the sidelink relay 730 may transmit the DCR message received from remote UE A 700 to remote UE B 750 in operation 705 (Direct connection request). For example, the DCR message of operation 705 may not include relay discovery indication information.

According to an embodiment, remote UE B 750 may transmit a direct connection accept message to perform communication with remote UE A 700 through a relay of the sidelink relay 730 in operation 707 (Direct connection accept). The sidelink relay 730 may transmit the direct connection accept message from remote UE B 750 to remote UE A 700 in operation 709 (Direct connection accept). Remote UE A 700 and the sidelink relay 730 and remote UE B 750 and the sidelink relay 730 may perform a procedure for a direct sidelink connection to relay data transmission between remote UE A 700 and remote UE B 750. Remote UE A 700 and remote UE B 750 may perform sidelink-based direct communication through a relay of the sidelink relay 730.

According to various embodiments of the disclosure, a method for transmitting and receiving a sidelink relay discovery message (including a sidelink relay discovery request message) in the procedures of FIG. 6 and FIG. 7, that is, a procedure for discovering a sidelink relay between a remote UE and another remote UE, will be described.

### (1) Method 1

According to an embodiment, a sidelink relay discovery message and a sidelink relay discovery request message may be transmitted and/or received using the format of a PC5 relay discovery message or a DCR message with a relay discovery indication.

According to an embodiment, a sidelink radio bearer for transmitting/receiving the PC5 relay discovery message or the DCR message with the relay discovery indication may be configured as sidelink signaling radio bearer 4 (SL-SRB4). That is, a sidelink radio bearer for transmitting/receiving a sidelink relay discovery message between a remote UE and another remote UE may be configured as SL-SRB4 the same as a sidelink radio bearer for transmitting/receiving a sidelink relay discovery message between the remote UE and a network. A DCR message for requesting establishment of a general direct sidelink connection between the remote UE and the other remote UE may be configured to use SL-SRB0.

According to an embodiment, in a case where a sidelink relay and/or the remote UE support both sidelink relay discovery between the remote UE and the other remote UE and sidelink relay discovery between the remote UE and the network, an upper layer (e.g., a ProSe layer, a V2X layer, and/or a PC5-S layer) of the sidelink relay and an upper layer of the remote UE may forward information indicating whether a sidelink discovery message to be transmitted is the sidelink relay discovery between the remote UE and the other remote UE or the sidelink relay discovery between the remote UE and the network to each RRC layer.

For example, the RRC layer may forward information indicating that the sidelink discovery message is the sidelink relay discovery between the remote UE and the other remote UE and information indicating that the sidelink discovery message is the sidelink relay discovery between the remote UE and the network to a PDCP layer, an RLC layer, and a MAC layer. For example, when the information indicating that the sidelink discovery message is the sidelink relay discovery between the remote UE and the other remote UE is transmitted from an upper layer of a transmitting UE (remote UE or sidelink relay) to an RRC layer, the RRC layer may configure SL-SRB4 corresponding to the sidelink relay discovery message, and may instruct a PDCP layer to generate a PDCP entity capable of processing SL-SRB4. When receiving an indication that transmission of the sidelink relay discovery message between the remote UE and the other remote UE is not needed any more from the upper layer of the transmitting UE, the RRC layer may transmit an indication of releasing the PDCP entity generated for transmission of the sidelink relay discovery message between the remote UE and the other remote UE to the PDCP layer. The PDCP entity receiving the sidelink relay discovery message between the remote UE and the other remote UE may be generated and released in the same manner as a PDCP entity receiving the sidelink relay discovery message between the remote UE and the network.

According to an embodiment, in a case where a receiving UE (sidelink relay or remote UE) supports both sidelink relay discovery between the remote UE and the other remote UE and sidelink relay discovery between the remote UE and the network, when the PDCP layer of the receiving UE determines that the sidelink relay discovery message between the remote UE and the other remote UE has been received or determines that the sidelink relay discovery message between the remote UE and the network has been received, the PDCP layer of the receiving UE may forward information indicating whether the received sidelink discovery message is the sidelink relay discovery between the remote UE and the other remote UE or the sidelink relay discovery between the remote UE and the network to each upper layer (e.g., the ProSe layer, the V2X layer, and the PC5-S layer).

According to an embodiment, a logical channel for transmitting and receiving the sidelink relay discovery message between the remote UE and the other remote UE and a logical channel for transmitting and receiving the sidelink relay discovery message between the remote UE and the network may be configured differently. For example, the logical channels configured differently may be used to distinguish the sidelink relay discovery message between the remote UE and the other remote UE from the sidelink relay discovery message between the remote UE and the network. The MAC layer may select a corresponding logical channel according to the information indicating whether the sidelink discovery message is the sidelink relay discovery message between the remote UE and the other remote UE or the sidelink relay discovery message between the remote UE and the network from the RRC layer.

According to an embodiment, the transmitting UE (e.g., the remote UE or the sidelink relay) may transmit a sidelink discovery message through a logical channel configured for each according to an indication of the sidelink relay discovery message between the remote UE and the other remote UE or an indication of the sidelink relay discovery message between the remote UE and the network forwarded from the RRC layer to the MAC layer.

According to an embodiment, the receiving UE (e.g., the remote UE or the sidelink relay) may determine a sidelink discovery message received through the logical channel corresponding to the sidelink relay discovery message between the remote UE and the other remote UE or the logical channel corresponding to the sidelink relay discovery message between the remote UE and the network, and may transmit information indicating which relay discovery message the sidelink discovery message is to the upper layer.

According to an embodiment, a resource pool for transmitting the sidelink relay discovery message between the remote UE and the other remote UE may be configured as a discovery message transmission-dedicated pool or a general sidelink message transmission pool. For example, when selecting a resource for transmitting the sidelink relay discovery message between the remote UE and the other remote UE, the remote UE and the sidelink relay may select the resource from the discovery message transmission-dedicated pool when determining that the discovery message transmission-dedicated pool is configured, and may select the resource from the general sidelink message transmission pool when determining that the discovery message transmission-dedicated pool is not configured.

According to an embodiment, when transmitting and receiving the sidelink relay discovery message between the remote UE and the other remote UE, the remote UE and the sidelink relay may select a destination layer-2 ID and/or a source layer-2 ID from a layer-2 ID pool configured for the sidelink relay discovery message between the remote UE and the other remote UE. For example, the layer-2 ID pool may be configured separately from a layer-2 ID pool configured for general sidelink communication. The MAC layers of the remote UE and the sidelink relay may perform an operation of selecting a discovery message transmission resource pool and perform an operation of selecting the destination layer-2 ID and the source layer-2 ID according to (or based on) whether the information indicating whether the sidelink discovery message is the sidelink relay discovery message between the remote UE and the other remote UE and/or the information indicating whether the sidelink discovery message is the sidelink relay discovery message between the remote UE and the network from the RRC layers.

According to an embodiment, the transmitting UE (remote UE or sidelink relay) may not multiplex a MAC PDU including the sidelink relay discovery message between the remote UE and the other remote UE in the same transport block (TB) as that for a MAC PDU including general sidelink data.

### (2) Method 2

According to an embodiment, a sidelink relay discovery message and a sidelink relay discovery request message may be transmitted and/or received using the format of a PC5 relay discovery message or a DCR message with a relay discovery indication.

According to an embodiment, a sidelink radio bearer for transmitting/receiving the PC5 relay discovery message or the DCR message with the relay discovery indication may be configured as a new sidelink signaling radio bearer (SL-SRB). For example, a sidelink radio bearer for transmitting/receiving a sidelink relay discovery message between a remote UE and another remote UE may be configured to be different from SL-SRB4, which is a sidelink radio bearer for transmitting/receiving a sidelink relay discovery message between the remote UE and a network. A DCR message for requesting establishment of a general direct sidelink connection between the remote UE and the other remote UE may be configured to use SL-SRB0.

According to an embodiment, in a case where a sidelink relay and/or the remote UE support both sidelink relay discovery between the remote UE and the other remote UE and sidelink relay discovery between the remote UE and the network, an upper layer (e.g., a ProSe layer, a V2X layer, or a PC5-S layer) of the sidelink relay and an upper layer of the remote UE may forward information indicating whether a sidelink discovery message to be transmitted is the sidelink relay discovery between the remote UE and the other remote UE or the sidelink relay discovery between the remote UE and the network to each RRC layer. For example, the RRC layer may forward information indicating that the sidelink discovery message is the sidelink relay discovery between the remote UE and the other remote UE and/or information indicating that the sidelink discovery message is the sidelink relay discovery between the remote UE and the network to a PDCP layer, an RLC layer, and/or a MAC layer.

According to an embodiment, when the information indicating that the sidelink discovery message is the sidelink relay discovery between the remote UE and the other remote UE is transmitted from an upper layer of a transmitting UE (e.g., the remote UE or the sidelink relay) to an RRC layer, the RRC layer may configure a new SL-SRB corresponding to the sidelink relay discovery message, and may instruct a PDCP layer to generate a PDCP entity capable of processing the new SL-SRB.

According to an embodiment, when the information indicating that the sidelink discovery message is the sidelink relay discovery between the remote UE and the other remote UE is transmitted from the upper layer of the transmitting UE (e.g., the remote UE or the sidelink relay) to the RRC layer, the RRC layer may configure SL-SRB4 corresponding to the sidelink relay discovery message, and may instruct the PDCP layer to generate a PDCP entity capable of processing SL-SRB4. When receiving an indication that transmission of the sidelink relay discovery message between the remote UE and the other remote UE is not needed any more from the upper layer of the transmitting UE, the RRC layer may transmit an indication of releasing the PDCP entity corresponding to the new SL-SRB, generated for transmission of the sidelink relay discovery message between the remote UE and the other remote UE, to the PDCP layer. The PDCP entity processing the SL-SRB for receiving the sidelink relay discovery message between the remote UE and the other remote UE, may be generated and released in the same manner as the PDCP entity processing SL-SRB4 for receiving the sidelink relay discovery message between the remote UE and the network.

According to an embodiment, in a case where a receiving UE (sidelink relay or remote UE) supports both sidelink relay discovery between the remote UE and the other remote UE and sidelink relay discovery between the remote UE and the network, when the PDCP layer of the receiving UE determines that the sidelink relay discovery message between the remote UE and the other remote UE has been received or determines that the sidelink relay discovery message between the remote UE and the network has been received, the PDCP layer of the receiving UE may forward information indicating whether the received sidelink discovery message is the sidelink relay discovery between the remote UE and the other remote UE or the sidelink relay discovery between the remote UE and the network to each upper layer (e.g., the ProSe layer, the V2X layer, and/or the PC5-S layer).

According to an embodiment, a logical channel for transmitting and receiving the sidelink relay discovery message between the remote UE and the other remote UE and a logical channel for transmitting and receiving the sidelink relay discovery message between the remote UE and the network may be configured differently. For example, the logical channels configured differently may be used to distinguish the sidelink relay discovery message between the remote UE and the other remote UE from the sidelink relay discovery message between the remote UE and the network. For example, the MAC layer may select a corresponding logical channel according to the information indicating whether the sidelink discovery message is the sidelink relay discovery message between the remote UE and the other remote UE or the sidelink relay discovery message between the remote UE and the network from the RRC layer. The transmitting UE (remote UE or sidelink relay) may transmit a sidelink discovery message through a logical channel configured for each message according to an indication of the sidelink relay discovery message between the remote UE and the other remote UE or an indication of the sidelink relay discovery message between the remote UE and the network forwarded from the RRC layer to the MAC layer. The receiving UE (remote UE or sidelink relay) may determine a sidelink discovery message received through the logical channel corresponding to the sidelink relay discovery message between the remote UE and the other remote UE or the logical channel corresponding to the sidelink relay discovery message between the remote UE and the network, and may transmit information indicating which relay discovery message the sidelink discovery message is to the upper layer.

According to an embodiment, a resource pool for transmitting the sidelink relay discovery message between the remote UE and the other remote UE may be configured as a discovery message transmission-dedicated pool or a general sidelink message transmission pool. For example, when selecting a resource for transmitting the sidelink relay discovery message between the remote UE and the other remote UE, the remote UE and the sidelink relay may select the resource from the discovery message transmission-dedicated pool when determining that the discovery message transmission-dedicated pool is configured, and may select the resource from the general sidelink message transmission pool when determining that the discovery message transmission-dedicated pool is not configured.

According to an embodiment, when transmitting and receiving the sidelink relay discovery message between the remote UE and the other remote UE, the remote UE and the sidelink relay may select a destination layer-2 ID and/or a source layer-2 ID from a layer-2 ID pool configured for the sidelink relay discovery message between the remote UE and the other remote UE. The layer-2 ID pool may be configured separately from a layer-2 ID pool configured for general sidelink communication. The MAC layers of the remote UE and the sidelink relay may perform an operation of selecting a discovery message transmission resource pool and perform an operation of selecting the destination layer-2 ID and the source layer-2 ID according to (or based on) whether the information indicating whether the sidelink discovery message is the sidelink relay discovery message between the remote UE and the other remote UE and/or the information indicating whether the sidelink discovery message is the sidelink relay discovery message between the remote UE and the network from the RRC layers.

According to an embodiment, the transmitting UE (e.g., the remote UE or the sidelink relay) may not multiplex a MAC PDU including the sidelink relay discovery message between the remote UE and the other remote UE in the same transport block (TB) as that for a MAC PDU including general sidelink data.

### (3) Method 3

According to an embodiment, when a sidelink relay discovery message is transmitted and received using the format of a DCR message with a relay discovery indication, a sidelink radio bearer for transmitting/receiving the DCR message with the relay discovery indication may be configured as sidelink signaling radio bearer 0 (SL-SRB0). A sidelink radio bearer for transmitting/receiving a sidelink relay discovery message between a remote UE and a network may be configured as SL-SRB4. When the sidelink relay discovery message between the remote UE and another remote UE is transmitted and received using the format of a PC5 relay discovery message, the sidelink radio bearer may be configured as a SL-SRB (SL-SRB4 or a new SL-SRB) other than SL-SRB0. For example, whether the sidelink relay discovery message is in the format of the DCR message with the relay discovery indication or the format of the PC5 relay discovery message may be preconfigured in the UE.

According to an embodiment, a sidelink relay or the remote UE may support at least one or a combination of transmission and reception of the sidelink relay discovery message between the remote UE and the other UE with the format of the PC5 relay discovery message, transmission and reception of the sidelink relay discovery message between the remote UE and the other UE with the format of the DCR message with the relay discovery indication, transmission and reception of a direct sidelink connection establishment message between the remote UE and the other remote UE, or transmission and reception of the sidelink relay discovery message between the remote UE and the network. In each case, a transmitted message and a received message may be differently processed in an RRC layer, a PDCP layer, an RLC layer, and/or a MAC layer. Accordingly, an upper layer of a transmitting UE (e.g., the sidelink relay or the remote UE) may forward, to the RRC layer, an indication of transmission in the format of the PC5 relay discovery message, an indication of transmitting the sidelink relay discovery message between the remote UE and the other remote UE in the format of the DCR message with the relay discovery indication, an indication of transmitting the direct sidelink connection establishment message between the remote UE and the other remote UE, and/or an indication of transmitting the sidelink relay discovery message between the remote UE and the network.

According to an embodiment, the RRC layer may indicate which configuration is applied to the PDCP layer, the RLC layer, and/or the MAC layer according to indication information from the upper layer. That is, the RRC layer may determine or identify a configuration to be applied to the PDCP layer, the RLC layer, and/or the MAC layer, based on the indication information from the upper layer.

According to an embodiment, when determining reception in the format of the PC5 relay discovery message, reception of the sidelink relay discovery message between the remote UE and the other remote UE in the format of the DCR message with the relay discovery indication, reception of the direct sidelink connection establishment message between the remote UE and the other remote UE, or reception of the sidelink relay discovery message between the remote UE and the network, a receiving UE (e.g., the sidelink relay or the remote UE) may forward information about the received message to an upper layer. For example, a PDCP layer of the receiving UE (sidelink relay or remote UE) may transmit, to the upper layer (e.g., a ProSe layer, a V2X layer, and a PC5-S layer), indication information about which case the received message corresponds to.

For example, when receiving an indication indicating transmission of the DCR message with the relay discovery indication from the RRC layer, the PDCP layer of the transmitting UE (e.g., the sidelink relay or the remote UE) may configure SL-SRB0 for the DCR with the relay discovery indication, and may generate a PDCP transmission entity corresponding to SL-SRB0. For example, when receiving an indication that transmission of the sidelink relay discovery message between the remote UE and the other remote UE in the format of the DCR with the relay discovery indication is not needed any more from the upper layer of the transmitting UE, the RRC layer may transmit an indication of releasing the PDCP entity corresponding to SL-SRB0, generated for transmission of the sidelink relay discovery message between the remote UE and the other remote UE, to the PDCP layer. The PDCP entity processing SL-SRB0 for receiving the DCR with relay discovery indication as the sidelink relay discovery message between the remote UE and the other remote UE may be generated and released in the same manner as a PDCP entity processing SL-SRB4 for receiving the sidelink relay discovery message between the remote UE and the network.

According to an embodiment, a logical channel for transmitting and receiving the DCR with the relay discovery indication as the sidelink relay discovery message between the remote UE and the other remote UE may be configured to be different from a logical channel for transmitting and receiving a general DCR message. The logical channel for transmitting and receiving the DCR with the relay discovery indication may be configured to be different from a logical channel for transmitting and receiving the PC5 relay discovery message. For example, the logical channel for transmitting and receiving the DCR with the relay discovery indication may be configured to be different from a logical channel for transmitting and receiving the sidelink relay discovery message between the remote UE and the network. For example, the MAC layer may select a corresponding logical channel according to information indicating the sidelink relay discovery message between the remote UE and the other remote UE in the format of the DCR with the relay discovery indication, the sidelink relay discovery message between the remote UE and the other remote UE in the format of the PC5 relay discovery, the general DCR message between the remote UE and the other remote UE, and/or the sidelink relay discovery message between the remote UE and the network from the RRC layer. The transmitting UE (e.g., the remote UE or the sidelink relay) may transmit a sidelink discovery message through a logical channel configured for each message according to an indication of the DCR with the relay discovery indication as the sidelink relay discovery message between the remote UE and the other remote UE, an indication of the PC5 relay discovery as the sidelink relay discovery message between the remote UE and the other remote UE, an indication of the general DCR message between the remote UE and the other remote UE, or an indication of the sidelink relay discovery message between the remote UE and the network forwarded from the RRC layer to the MAC layer. The receiving UE (e.g., the remote UE or the sidelink relay) may determine the logical channel corresponding to the DCR with the relay discovery indication as the sidelink relay discovery message between the remote UE and the other remote UE, the logical channel corresponding to the PC5 relay discovery as the sidelink relay discovery message between the remote UE and the other remote UE, the logical channel corresponding to the general DCR message between the remote UE and the other remote UE, or the logical channel corresponding to the sidelink relay discovery message between the remote UE and the network, and may forward information indicating a corresponding case to the upper layer.

According to an embodiment, a resource pool for transmitting the DCR with the relay discovery indication as the sidelink relay discovery message between the remote UE and the other remote UE may be configured as a discovery message transmission-dedicated pool or a general sidelink message transmission pool. For example, when selecting a resource for transmitting the DCR with the relay discovery indication as the sidelink relay discovery message between the remote UE and the other remote UE, the remote UE and the sidelink relay may select the resource from the discovery message transmission-dedicated pool when determining that the discovery message transmission-dedicated pool is configured, and may select the resource from the general sidelink message transmission pool when determining that the discovery message transmission-dedicated pool is not configured.

According to an embodiment, when transmitting and receiving the DCR with the relay discovery indication as the sidelink relay discovery message between the remote UE and the other remote UE, the remote UE and the sidelink relay may select a destination layer-2 ID and/or a source layer-2 ID from a layer-2 ID pool configured for the sidelink relay discovery message between the remote UE and the other remote UE. For example, a layer-2 ID included in the DCR with the relay discovery indication may be different from a layer-2 ID included in a DCR message for a direct connection request. In one example, the DCR for the direct connection request may be a general connection request message not including a relay discovery indication. For example, the layer-2 ID pool may be configured separately from a layer-2 ID pool used for a DCR message for general sidelink communication. The MAC layers of the remote UE and the sidelink relay may perform an operation of selecting a discovery message transmission resource pool and perform an operation of selecting the destination layer-2 ID and the source layer-2 ID according to information indicating the DCR with the relay discovery indication message as the sidelink relay discovery message between the remote UE and the other remote UE, information indicating the PC5 relay discovery message as the sidelink relay discovery message between the remote UE and the other remote UE, information indicating the DCR message for establishing a general direct connection between the remote UE and the other remote UE, or information indicating the sidelink relay discovery message between the remote UE and the network from the RRC layers.

In another example, a layer-2 ID included in the PC6 discovery message may be different from the layer-2 ID included in the DCR message for the direct connection request. In one example, the DCR for the direct connection request may be a general connection request message not including a relay discovery indication.

According to an embodiment, the transmitting UE (remote UE or sidelink relay) may not multiplex a MAC PDU including the DCR with the relay discovery indication as the sidelink relay discovery message between the remote UE and the other remote UE in the same transport block (TB) as that for a MAC PDU including general sidelink data.

### (4) Method 4

A sidelink relay discovery message and a sidelink relay discovery request message may be transmitted and received using the format of a PC5 relay discovery message or a DCR message with a relay discovery indication. A sidelink radio bearer for transmitting/receiving the PC5 relay discovery message or the DCR message with the relay discovery indication may be configured as sidelink signaling radio bearer 4 (SL-SRB4). That is, a sidelink radio bearer for transmitting/receiving a sidelink relay discovery message between a remote UE and another remote UE may be configured as SL-SRB4 the same as a sidelink radio bearer for transmitting/receiving a sidelink relay discovery message between the remote UE and a network. A DCR message for requesting establishment of a general direct sidelink connection between the remote UE and the other remote UE may be configured to use SL-SRB0.

A sidelink relay or the remote UE may support at least one or a combination of transmission and reception of the sidelink relay discovery message between the remote UE and the other UE with the format of the PC5 relay discovery message, transmission and reception of the sidelink relay discovery message between the remote UE and the other UE with the format of the DCR message with the relay discovery indication, transmission and reception of a direct sidelink connection establishment message between the remote UE and the other remote UE, or transmission and reception of the sidelink relay discovery message between the remote UE and the network. In each case, a transmitted message and a received message may be differently processed in an RRC layer, a PDCP layer, an RLC layer, and a MAC layer, and thus an upper layer of a transmitting UE (sidelink relay or remote UE) may forward, to the RRC layer, an indication of transmission in the format of the PC5 relay discovery message, an indication of transmitting the sidelink relay discovery message between the remote UE and the other remote UE in the format of the DCR message with the relay discovery indication, an indication of transmitting the direct sidelink connection establishment message between the remote UE and the other remote UE, or an indication of transmitting the sidelink relay discovery message between the remote UE and the network. The RRC layer may indicate which configuration is applied to the PDCP layer, the RLC layer, and/or the MAC layer according to indication information from the upper layer. When determining reception in the format of the PC5 relay discovery message, reception of the sidelink relay discovery message between the remote UE and the other remote UE in the format of the DCR message with the relay discovery indication, reception of the direct sidelink connection establishment message between the remote UE and the other remote UE, or reception of the sidelink relay discovery message between the remote UE and the network, a receiving UE (sidelink relay or remote UE) may forward information about the received message to the upper layer. For example, a PDCP layer of the receiving UE (sidelink relay or remote UE) may transmit, to the upper layer (e.g., a ProSe layer, a V2X layer, or a PC5-S layer), indication information about which case the received message corresponds to.

When receiving an indication indicating transmission of the DCR message with the relay discovery indication from the RRC layer, the PDCP layer of the transmitting UE (sidelink relay or remote UE) may configure SL-SRB4 for the DCR with the relay discovery indication, and may generate a PDCP transmission entity corresponding to SL-SRB4. When receiving an indication that transmission of the sidelink relay discovery message between the remote UE and the other remote UE in the format of the DCR with the relay discovery indication is not needed any more from the upper layer of the transmitting UE, the RRC layer may transmit an indication of releasing the PDCP entity corresponding to SL-SRB4, generated for transmission of the sidelink relay discovery message between the remote UE and the other remote UE, to the PDCP layer. The PDCP entity processing SL-SRB4 for receiving the DCR with relay discovery indication as the sidelink relay discovery message between the remote UE and the other remote UE may be generated and released in the same manner as a PDCP entity processing SL-SRB4 for receiving the sidelink relay discovery message between the remote UE and the network.

A logical channel for transmitting and receiving the DCR with the relay discovery indication as the sidelink relay discovery message between the remote UE and the other remote UE may be configured to be different from a logical channel for transmitting and receiving the PC5 relay discovery as the sidelink relay discovery message between the remote UE and the other remote UE. The MAC layer may select a corresponding logical channel according to information indicating the sidelink relay discovery message between the remote UE and the other remote UE in the format of the DCR with the relay discovery indication, the sidelink relay discovery message between the remote UE and the other remote UE in the format of the PC5 relay discovery, the general DCR message between the remote UE and the other remote UE, or the sidelink relay discovery message between the remote UE and the network from the RRC layer. The transmitting UE (remote UE or sidelink relay) may transmit a sidelink discovery message through a logical channel configured for each message according to an indication of the DCR with the relay discovery indication as the sidelink relay discovery message between the remote UE and the other remote UE, an indication of the PC5 relay discovery as the sidelink relay discovery message between the remote UE and the other remote UE, an indication of the general DCR message between the remote UE and the other remote UE, or an indication of the sidelink relay discovery message between the remote UE and the network forwarded from the RRC layer to the MAC layer. The receiving UE (remote UE or sidelink relay) may determine the logical channel corresponding to the DCR with the relay discovery indication as the sidelink relay discovery message between the remote UE and the other remote UE, the logical channel corresponding to the PC5 relay discovery as the sidelink relay discovery message between the remote UE and the other remote UE, the logical channel corresponding to the general DCR message between the remote UE and the other remote UE, or the logical channel corresponding to the sidelink relay discovery message between the remote UE and the network, and may forward information indicating a corresponding case to the upper layer.

A resource pool for transmitting the DCR with the relay discovery indication as the sidelink relay discovery message between the remote UE and the other remote UE may be configured as a discovery message transmission-dedicated pool or a general sidelink message transmission pool. When selecting a resource for transmitting the DCR with the relay discovery indication as the sidelink relay discovery message between the remote UE and the other remote UE, the remote UE and the sidelink relay may select the resource from the discovery message transmission-dedicated pool when determining that the discovery message transmission-dedicated pool is configured, and may select the resource from the general sidelink message transmission pool when determining that the discovery message transmission-dedicated pool is not configured.

When transmitting and receiving the DCR with the relay discovery indication as the sidelink relay discovery message between the remote UE and the other remote UE, the remote UE and the sidelink relay may select a destination layer-2 ID and/or a source layer-2 ID from a layer-2 ID pool configured for the sidelink relay discovery message between the remote UE and the other remote UE. The layer-2 ID pool may be configured separately from a layer-2 ID pool used for a DCR message for general sidelink communication. The MAC layers of the remote UE and the sidelink relay may perform an operation of selecting a discovery message transmission resource pool and perform an operation of selecting the destination layer-2 ID and the source layer-2 ID according to information indicating the DCR message with the relay discovery indication as the sidelink relay discovery message between the remote UE and the other remote UE, information indicating the PC5 relay discovery message as the sidelink relay discovery message between the remote UE and the other remote UE, information indicating the DCR message for establishing a general direct connection between the remote UE and the other remote UE, or information indicating the sidelink relay discovery message between the remote UE and the network from the RRC layers.

The transmitting UE (remote UE or sidelink relay) may not multiplex a MAC PDU including the DCR with the relay discovery indication as the sidelink relay discovery message between the remote UE and the other remote UE in the same transport block (TB) as that for a MAC PDU including general sidelink data.

### (5) Method 5

According to an embodiment, a sidelink relay discovery message and a sidelink relay discovery request message may be transmitted and received using the format of a PC5 relay discovery message or a DCR message with a relay discovery indication. A sidelink radio bearer for transmitting/receiving the PC5 relay discovery message or the DCR message with the relay discovery indication may be configured as a new sidelink signaling radio bearer (SL-SRB). A sidelink radio bearer for transmitting/receiving a sidelink relay discovery message between a remote UE and a network may be configured as SL-SRB4. A DCR message for requesting establishment of a general direct sidelink connection between the remote UE and another remote UE may be configured to use SL-SRB0.

According to an embodiment, a sidelink relay or the remote UE may support at least one or a combination of transmission and reception of the sidelink relay discovery message between the remote UE and the other UE with the format of the PC5 relay discovery message, transmission and reception of the sidelink relay discovery message between the remote UE and the other UE with the format of the DCR message with the relay discovery indication, transmission and reception of a direct sidelink connection establishment message between the remote UE and the other remote UE, or transmission and reception of the sidelink relay discovery message between the remote UE and the network. In each case, a transmitted message and a received message may be differently processed in an RRC layer, a PDCP layer, an RLC layer, and a MAC layer, and thus an upper layer of a transmitting UE (sidelink relay or remote UE) may forward, to the RRC layer, an indication of transmission in the format of the PC5 relay discovery message, an indication of transmitting the sidelink relay discovery message between the remote UE and the other remote UE in the format of the DCR message with the relay discovery indication, an indication of transmitting the direct sidelink connection establishment message between the remote UE and the other remote UE, or an indication of transmitting the sidelink relay discovery message between the remote UE and the network. The RRC layer may indicate which configuration is applied to the PDCP layer, the RLC layer, and/or the MAC layer according to indication information from the upper layer. When determining reception in the format of the PC5 relay discovery message, reception of the sidelink relay discovery message between the remote UE and the other remote UE in the format of the DCR message with the relay discovery indication, reception of the direct sidelink connection establishment message between the remote UE and the other remote UE, or reception of the sidelink relay discovery message between the remote UE and the network, a receiving UE (sidelink relay or remote UE) may forward information about the received message to the upper layer. For example, a PDCP layer of the receiving UE (sidelink relay or remote UE) may transmit, to the upper layer (e.g., a ProSe layer, a V2X layer, or a PC5-S layer), indication information about which case the received message corresponds to.

According to an embodiment, when receiving an indication indicating transmission of the DCR message with the relay discovery indication from the RRC layer, the PDCP layer of the transmitting UE (e.g., the sidelink relay or the remote UE) may configure the new SL-SRB for the DCR with the relay discovery indication, and may generate a PDCP transmission entity corresponding to the new SL-SRB. When receiving an indication that transmission of the sidelink relay discovery message between the remote UE and the other remote UE in the format of the DCR with the relay discovery indication is not needed any more from the upper layer of the transmitting UE, the RRC layer may transmit an indication of releasing the PDCP entity corresponding to the new SL-SRB, generated for transmission of the sidelink relay discovery message between the remote UE and the other remote UE, to the PDCP layer. The PDCP entity processing the new SL-SRB for receiving the DCR with relay discovery indication as the sidelink relay discovery message between the remote UE and the other remote UE may be generated and released in the same manner as a PDCP entity processing a new SL-SRB for receiving the sidelink relay discovery message between the remote UE and the network.

According to an embodiment, a logical channel for transmitting and receiving the DCR with the relay discovery indication as the sidelink relay discovery message between the remote UE and the other remote UE may be configured to be different from a logical channel for transmitting and receiving the PC5 relay discovery as the sidelink relay discovery message between the remote UE and the other remote UE. The MAC layer may select a corresponding logical channel according to information indicating the sidelink relay discovery message between the remote UE and the other remote UE in the format of the DCR with the relay discovery indication, the sidelink relay discovery message between the remote UE and the other remote UE in the format of the PC5 relay discovery, the general DCR message between the remote UE and the other remote UE, or the sidelink relay discovery message between the remote UE and the network from the RRC layer. The transmitting UE (remote UE or sidelink relay) may transmit a sidelink discovery message through a logical channel configured for each message according to an indication of the DCR with the relay discovery indication as the sidelink relay discovery message between the remote UE and the other remote UE, an indication of the PC5 relay discovery as the sidelink relay discovery message between the remote UE and the other remote UE, an indication of the general DCR message between the remote UE and the other remote UE, or an indication of the sidelink relay discovery message between the remote UE and the network forwarded from the RRC layer to the MAC layer. The receiving UE (remote UE or sidelink relay) may determine the logical channel corresponding to the DCR with the relay discovery indication as the sidelink relay discovery message between the remote UE and the other remote UE, the logical channel corresponding to the PC5 relay discovery as the sidelink relay discovery message between the remote UE and the other remote UE, the logical channel corresponding to the general DCR message between the remote UE and the other remote UE, or the logical channel corresponding to the sidelink relay discovery message between the remote UE and the network, and may forward information indicating a corresponding case to the upper layer.

According to an embodiment, a resource pool for transmitting the DCR with the relay discovery indication as the sidelink relay discovery message between the remote UE and the other remote UE may be configured as a discovery message transmission-dedicated pool or a general sidelink message transmission pool. For example, when selecting a resource for transmitting the DCR with the relay discovery indication as the sidelink relay discovery message between the remote UE and the other remote UE, the remote UE and the sidelink relay may select the resource from the discovery message transmission-dedicated pool when determining that the discovery message transmission-dedicated pool is configured, and may select the resource from the general sidelink message transmission pool when determining that the discovery message transmission-dedicated pool is not configured.

According to an embodiment, when transmitting and receiving the DCR with the relay discovery indication as the sidelink relay discovery message between the remote UE and the other remote UE, the remote UE and the sidelink relay may select a destination layer-2 ID and/or a source layer-2 ID from a layer-2 ID pool configured for the sidelink relay discovery message between the remote UE and the other remote UE. For example, the layer-2 ID pool may be configured separately from a layer-2 ID pool used for a DCR message for general sidelink communication. The MAC layers of the remote UE and the sidelink relay may perform an operation of selecting a discovery message transmission resource pool and perform an operation of selecting the destination layer-2 ID and the source layer-2 ID according to (or based on) information indicating the DCR with the relay discovery indication message as the sidelink relay discovery message between the remote UE and the other remote UE, information indicating the PC5 relay discovery message as the sidelink relay discovery message between the remote UE and the other remote UE, information indicating the DCR message for establishing a general direct connection between the remote UE and the other remote UE, and/or information indicating the sidelink relay discovery message between the remote UE and the network from the RRC layers.

The transmitting UE (e.g., the remote UE or the sidelink relay) may not multiplex a MAC PDU including the DCR with the relay discovery indication as the sidelink relay discovery message between the remote UE and the other remote UE in the same transport block (TB) as that for a MAC PDU including general sidelink data.

According to various embodiments of the disclosure, when transmitting and receiving a DCR with a relay discovery indication as a sidelink relay discovery message between a remote UE and another remote UE, a transmitting UE (e.g., a sidelink relay or the remote UE) may select a destination layer-2 ID and a source layer-2 ID from a layer-2 ID pool the same as a layer-2 ID pool used for a general DCR message for sidelink direct communication. A MAC layer of the transmitting UE (e.g., the remote UE or the sidelink relay) may perform an operation of selecting the destination layer-2 ID and the source layer-2 ID from the layer-2 ID pool used for the general DCR message for sidelink direct communication, based on information indicating the DCR message with the relay discovery indication as the sidelink relay discovery message between the remote UE and the other remote UE from an RRC layer. According to an embodiment, when the transmitting UE (e.g., the remote UE or the sidelink relay) selects the destination layer-2 ID and the source layer-2 ID from the same layer-2 ID pool as that for the general DCR message for a MAC PDU including the DCR with the relay discovery indication as the sidelink relay discovery message between the remote UE and the other remote UE and transmits the MAC PDU, the transmitting UE may not multiplex the MAC PDU including the DCR with the relay discovery indication in the same transport block (TB) as that for a MAC PDU including general sidelink data. According to an embodiment, when the transmitting UE (e.g., the remote UE or the sidelink relay) selects the destination layer-2 ID and the source layer-2 ID from the same layer-2 ID pool as that for the general DCR message for the MAC PDU including the DCR with the relay discovery indication as the sidelink relay discovery message between the remote UE and the other remote UE and transmits the MAC PDU, the transmitting UE may multiplex the MAC PDU including the DCR with the relay discovery indication in the same transport block (TB) as that for the MAC PDU including the general sidelink data, that is, a MAC PDU for which the same destination layer-2 ID as that for the MAC PDU including the DCR with the relay discovery indication is selected.

According to various embodiments of the disclosure, when a PC5 relay discovery message or a DCR message with a relay discovery indication is transmitted as a sidelink relay discovery message between a remote UE and another remote UE, an operation of a transmitting UE (sidelink relay or remote UE) selecting a destination layer-2 ID to configure a MAC PDU and selecting a logical channel(s) to be included in the MAC PDU is as follows in Table 1.

**[Table 1]**

| |
|---|
| **Selection of logical channels** |
| The MAC entity shall for each SCI corresponding to a new transmission: |
| 1> if *sl-BWP-DiscPoolConfig or sl-BWP-DiscPoolConfigCommon* is configured according |
| to RRC: |
| 2> if the new transmission is associated with a sidelink grant in *sl-DiscTxPoolSelectedor sl-* |
| *DiscTxPoolScheduling* configured in *sl-BWP-DiscPoolConfig or sl-BWP-DiscPoolConfigCommon:* |
| Embodiment: Case in which a designation layer-2 ID is selected from a layer-2 ID pool |
| configured for sidelink relay discovery with respect to a PC5 relay discovery message or DCR |
| message with a relay discovery indication when a dedicated resource pool for a sidelink relay |
| discovery message is configured and a transmission resource is allocated from this pool |
| 3> select a Destination associated with sidelink discovery, having at least one of the logical |
| channel with the highest priority, among the logical channels that satisfy all the following conditions |
| for the SL grant associated to the SCI: |
| 4> SL data is available for transmission; and |
| 4> *SBj*> 0, in case there is any logical channel having SBj> 0; and |
| 4> *sl-configuredGrantType1Allowed*, if configured, is set to true in case the SL grant is a |
| Configured Grant Type 1; and |
| 4> *sl-AllowedCG-List*, if configured, includes the configured grant index associated to the |
| SL grant; |
| Embodiment: Case in which a designation layer-2 ID is selected from a layer-2 ID pool |
| configured for general sidelink direct communication with respect to a DCR message with a relay |
| discovery indication when a dedicated resource pool for a sidelink relay discovery message is |
| configured and a transmission resource is allocated from this pool |
| 3> select a Destination associated with DCR for sidelink discovery as specified in upper layer |

| |
|---|
| specification (or a Destination associated with one of unicast, groupcast and broadcast for DCR |
| with relay discovery indication), having at least one of the logical channel with the highest priority, |
| among the logical channels that satisfy all the following conditions for the SL grant associated to |
| the SCI: |
| 4> SL data is available for transmission; and |
| 4> *SBj*> 0, in case there is any logical channel having SBj> 0; and |
| 4> *sl-configuredGrantType1Allowed*, if configured, is set to true in case the SL grant is a |
| Configured Grant Type 1; and |
| 4> *sl-AllowedCG-List*, if configured, includes the configured grant index associated to the |
| SL grant; |
| |
| (Operation in which a transmitting UE selects a destination layer-2 ID and selects a logical |
| channel when configuring a MAC PDU for general sidelink direct communication) |
| 3> select a Destination associated with one of unicast, groupcast and broadcast (excluding |
| the Destination(s) associated with sidelink discovery), having at least one of the MAC CE and the |
| logical channel with the highest priority, among the logical channels that satisfy all the following |
| conditions and MAC CE(s), if any, for the SL grant associated to the SCI: |
| 4> SL data is available for transmission; and |
| 4> *SBj*> 0, in case there is any logical channel having SBj> 0; and |
| 4> *sl-configuredGrantType1Allowed*, if configured, is set to true in case the SL grant is a |
| Configured Grant Type 1; and |
| 4> *sl-AllowedCG-List*, if configured, includes the configured grant index associated to the |
| SL grant; and |
| 4> *sl-HARQ-FeedbackEnabled* is set to disabled, if PSFCH is not configured for the SL grant |
| associated to the SCI. |

According to various embodiments of the disclosure, when a sidelink relay and a remote UE transmit a sidelink relay discovery message between the remote UE and another remote UE, the sidelink relay discovery message may correspond to a PC5 relay discovery message or a DCR message with a relay discovery indication, and a base station may schedule a sidelink relay discovery message transmission resource for the sidelink relay and the remote UE. The sidelink relay and the remote UE may transmit a sidelink buffer status report (SL-BSR) message for requesting a transmission resource for transmitting the sidelink relay discovery message to the base station. In an embodiment, a SidelinkUEInformationNR message may include SL-TxResourceReqListCommRelay information for the sidelink relay discovery message between the remote UE and the other remote UE, and when the sidelink relay and the remote UE report this information to the base station, a destination index included in the SL-BSR message may include the following information in Table 2 for the sidelink relay discovery message between the remote UE and the other remote UE.

**[Table 2]**

| |
|---|
| SL destination identity associated to same destination reported in *SL-TxResourceReqList, SL-TxResourceReqListDisc* and *SL-TxResourceReqListCommRelay, SL-TXResourceRequestListU2URelay*, if present. The value is indexed sequentially from "0" in the same ascending order of SL destination identity in *SL-TxResourceReqList, SL-TxResourceReqListDisc* and *SL-TxResourceReqListCommRelay, SL-TXResourceRequestListU2URelay* as specified in TS 38.331. When multiple lists are reported, the value is indexed sequentially across all the lists in the same order as presented in *SidelinkUEInformaitonNR* message; |

According to an embodiment, when the SidelinkUEInformationNR message includes SL-TXResourceRequestListU2URelay information for the sidelink relay discovery message between the remote UE and the other remote UE, the destination index included in the SL-BSR message may include the following information in Table 3 for the sidelink relay discovery message between the remote UE and the other remote UE.

**[Table 3]**

| |
|---|
| SL destination identity associated to same destination reported in *SL-TxResourceReqList, SL-TxResourceReqListDisc* and *SL-TxResourceReqListCommRelay, SL-TXResourceRequestListU2URelay*, if present. The value is indexed sequentially from "0" in the same ascending order of SL destination identity in *SL-TxResourceReqList,SL-TxResourceReqListDisc* and *SL-TxResourceReqListCommRelay, SL-TXResourceRequestListU2URelay* as specified in TS 38.331. When multiple lists are reported, the value is indexed sequentially across all the lists in the same order as presented in *SidelinkUEInformaitonNR* message; |

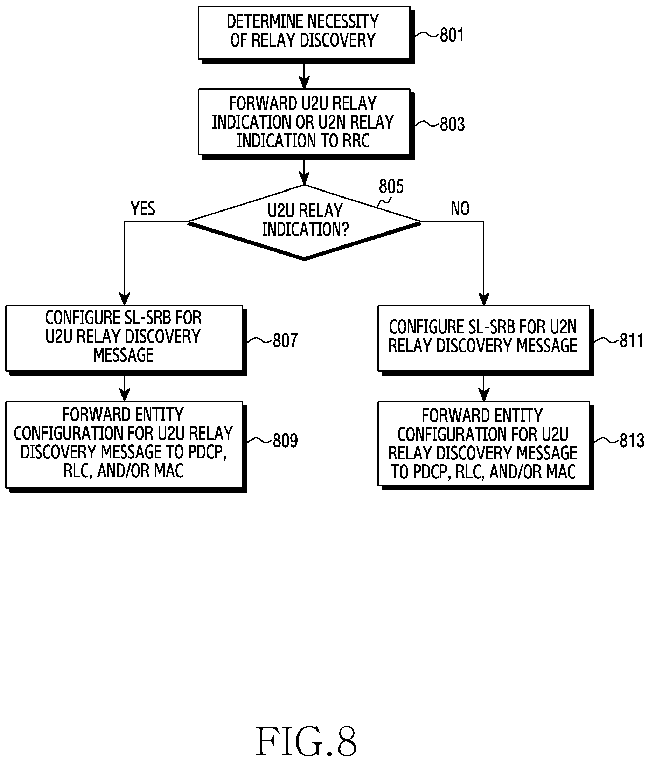

FIG. 8 illustrates an operation in which a remote UE and a sidelink relay transmit a sidelink relay discovery message between the remote UE and another remote UE according to an embodiment of the disclosure.

Referring to FIG. 8, the remote UE and the sidelink relay according to an embodiment may support both sidelink relay discovery between the remote UE and another remote UE and sidelink relay discovery between the remote UE and a network. For example, the remote UE and the sidelink relay may transmit a sidelink relay discovery message between the remote UE and the other remote UE or transmit a sidelink relay discovery message between the remote UE and the network. For example, the remote UE and the sidelink relay may process an indication that a message to be transmitted is a sidelink relay discovery message between the remote UE and the other remote UE or an indication that the message to be transmitted is a sidelink relay discovery message between the remote UE and the network, and may process an operation of configuring and transmitting a sidelink relay discovery message for each case.

According to an embodiment, in operation 801, a transmitting UE (sidelink relay or remote UE) may determine whether transmission of a sidelink relay discovery message is required. Determining whether the transmission of the sidelink relay discovery message is required may include an operation of determining whether transmission of a sidelink relay discovery message between the remote UE and the other remote UE is required, whether a condition for transmitting the sidelink relay discovery message between the remote UE and the other remote UE is configured and satisfies a discovery message transmission condition, whether transmission of a sidelink relay discovery message between the remote UE and the network is required, and/or whether a condition for transmitting the sidelink relay discovery message between the remote UE and the network is configured and satisfies a discovery message transmission condition. In operation 803, an upper layer (e.g., a ProSe layer, a V2X layer, or a PC5-S layer) of the transmitting UE may transmit information indicating whether the transmission of the sidelink relay discovery message is the transmission of the sidelink relay discovery message between the remote UE and the other remote UE or the transmission of the sidelink relay discovery message between the remote UE and the network to an RRC layer, based on determination in operation 801. For example, a U2U relay indication (or U2U relay indicator) or a U2N relay indication (or U2N relay indicator) may be transmitted to the RRC in operation 803.

According to an embodiment, in operation 805, the transmitting UE (or RRC layer) may determine whether the information is the U2U relay indicator.

According to an embodiment, when determining that the transmission of the sidelink relay discovery message is the transmission of the sidelink relay discovery message between the remote UE and the other remote UE in operation 805, the RRC layer of the transmitting UE may configure an SL-SRB configured for transmitting the sidelink relay discovery message between the remote UE and the other remote UE in operation 807. Configuration of the SL-SRB for transmitting the sidelink relay discovery message between the remote UE and the other remote UE may correspond to at least one of methods 1 to 5. In operation 809, the RRC layer of the transmitting UE may transmit information, such as an entity configuration, a logical channel configuration, and a transmission resource pool configuration, for transmitting the sidelink relay discovery message between the remote UE and the other remote UE to a PDCP layer, an RLC layer, and/or a MAC layer. The operations of the PDCP layer, the RLC layer, and the MAC layer processing the transmission of the sidelink relay discovery message between the remote UE and the other remote UE, based on the information from the RRC layer may correspond to at least one of methods 1 to 5.

According to an embodiment, when determining that the transmission of the indicating information transmitted by the upper layer of the transmitting UE to the RRC layer indicates the transmission of the sidelink relay discovery message between the remote UE and the network in operation 805, the RRC layer of the transmitting UE may configure SL-SRB4 configured for transmitting the sidelink relay discovery message between the remote UE and the network in operation 811. For example, the RRC layer of the transmitting UE may transmit information, such as an entity configuration, a logical channel configuration, and a transmission resource pool configuration, for transmitting the sidelink relay discovery message between the remote UE and the network to the PDCP layer, the RLC layer, and/or the MAC layer in operation 813. For example, the PDCP layer, the RLC layer, and/or the MAC layer of the transmitting UE may process the transmission of the sidelink relay discovery message between the remote UE and the network, based on the information from the RRC layer. Although the embodiment of FIG. 8 does not show processing transmission of a general sidelink direct communication connection establishment message or transmission of traffic transmitted and received in general sidelink direct communication except for the sidelink relay discovery message, the upper layer of the transmitting UE may forward an indication of the general sidelink direct communication connection establishment message or an indication of the traffic transmitted and received in general sidelink direct communication to the RRC layer, and the RRC layer of the transmitting UE may transmit a configuration for the PDCP layer, the RLC layer, and the MAC layer to each layer.

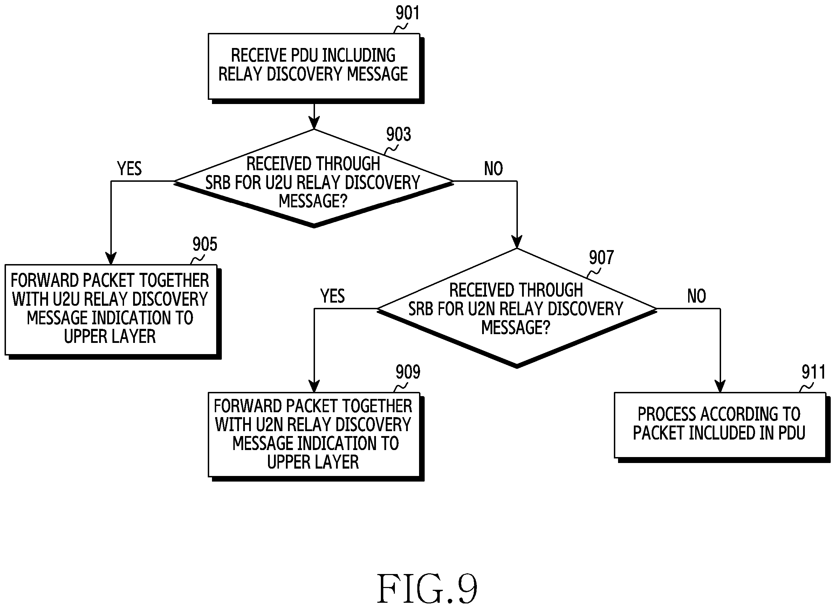

FIG. 9 illustrates an operation in which a remote UE and a sidelink relay receive a sidelink relay discovery message between the remote UE and another remote UE according to an embodiment of the disclosure.

Referring to FIG. 9, the remote UE and the sidelink relay according to an embodiment may support both sidelink relay discovery between the remote UE and another remote UE and sidelink relay discovery between the remote UE and a network. The remote UE and the sidelink relay may receive a sidelink relay discovery message between the remote UE and the other remote UE or receive a sidelink relay discovery message between the remote UE and the network. The remote UE and the sidelink relay may process determination that a received message is a sidelink relay discovery message between the remote UE and the other remote UE or determination that the received message is a sidelink relay discovery message between the remote UE and the network, and may perform an operation of forwarding information indicating which sidelink relay discovery message the received message is in each case to an upper layer (e.g., a ProSe layer, a V2X layer, or a PC5-S layer) of the receiving UE. FIG. 9 illustrates an operation of a receiving PDCP entity of the sidelink relay or the remote UE as an example.

In operation 901, the receiving UE (sidelink relay or remote UE) may receive a PDCP PDU including a sidelink relay discovery message. In operation 903, the receiving UE may determine whether the received PDCP PDU corresponds to an SL-SRB configured for a sidelink relay discovery message between the remote UE and the other remote UE. Configuration of the SL-SRB for the sidelink relay discovery message between the remote UE and the other remote UE may correspond to at least one of methods 1 to 5. When determining that the received PDCP PDU corresponds to the SL-SRB configured for the sidelink relay discovery message between the remote UE and the other remote UE in operation 903, the PDCP-layer entity of the receiving UE may forward a received PDCP SDU, together with an indication indicating the sidelink relay discovery message between the remote UE and the other remote UE, to the upper layer (e.g., the ProSe layer, the V2X layer, or the PC5-S layer) in operation 905. When determining that the received PDCP PDU is not received via the SL-SRB corresponding to the sidelink relay discovery message between the remote UE and the other remote UE in operation 903, the receiving UE may determine whether the received PDCP PDU corresponds to SL-SRB4 configured for a sidelink relay discovery message between the remote terminal and the network in operation 907. When determining that the received PDCP PDU corresponds to SL-SRB4 configured for the sidelink relay discovery message between the remote terminal and the network, the receiving UE may forward the received PDCP SDU, together with an indication indicating the sidelink relay discovery message between the remote UE and the network, to the upper layer (e.g., the ProSe layer, the V2X layer, or the PC5-S layer) in operation 909. When determining that the received PDCP PDU does not correspond to SL-SRB4 configured for the sidelink relay discovery message between the remote UE and the network in operation 907, the receiving UE may determine and process a received packet according to an SRB or data radio bearer (DRB) on which the PDCP PDU is received, and may forward information about the processed packet and the PDCP SDU to the upper layer (e.g., the ProSe layer, the V2X layer, or the PC5-S layer) in operation 911. The PDCP PDU that may be processed in operation 911 may include a general sidelink direct communication connection establishment message or traffic transmitted and received in general sidelink direct communication.

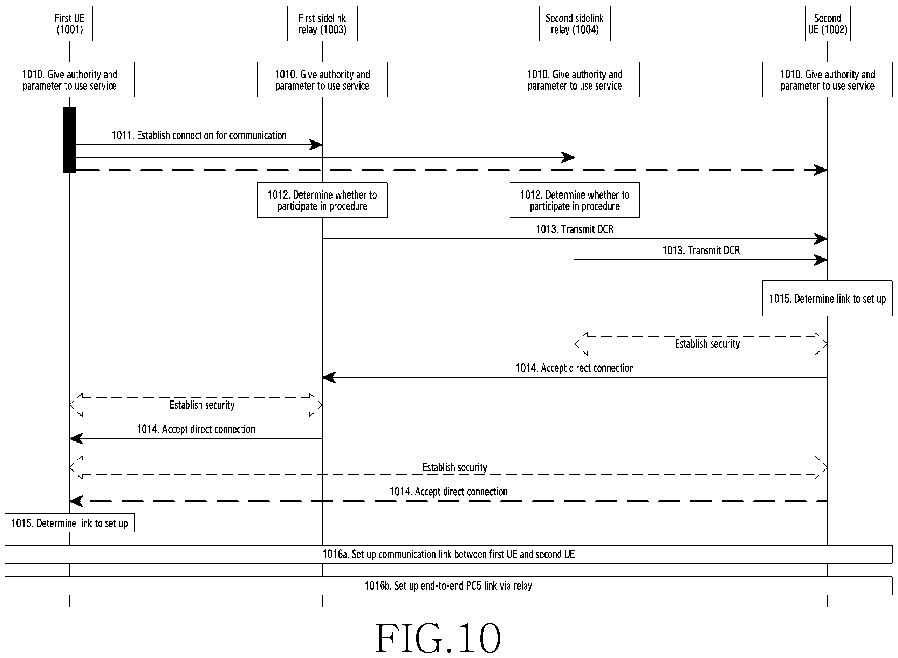

FIG. 10 illustrates transmission and/or reception of a sidelink relay discovery message according to an embodiment.

Referring to FIG. 10, a wireless communication system according to an embodiment may include a first UE 1001, a second UE 1002, a first sidelink relay 1003, and/or a second sidelink relay 1004.

According to an embodiment, in operation 1010, the first UE 1001 and/or the second UE 1002 may be given authority and/or a parameter to use a service provided by the sidelink relays (e.g., UE-to-UE relays) 1003 and 1004 (service authorization and parameter provisioning). The sidelink relays 1003 and 1004 may be authorized to provide a service of relaying traffic between UEs. Authorization for the UEs 1001 and 1002 and/or the sidelink relays 1003 and 1004 may be performed when the UEs 1001 and 1002 and/or the sidelink relays 1003 and 1004 are registered in a network.

According to an embodiment, in operation 1011, the first UE 1001 may establish unicast communication with the second UE 1002 (direct communication request, relay_indication enabled). The unicast communication may be performed directly between the first UE 1001 and the second UE 1002, or may be performed using at least one of the sidelink relays 1003 and 1004. In an embodiment, the first UE 1001 may broadcast a direct communication request with a relay indication. A broadcasted message (e.g., the direct communication request with the relay indication) may be received by the first sidelink relay 1003 and/or the second sidelink relay 1004. Further, the broadcasted message (e.g., the direct communication request with the relay indication) may be received by the second UE 1002.

According to an embodiment, in operation 1012, the first sidelink relay 1003 and/or the second sidelink relay 1004 may determine whether to participate in a procedure (decide to participate in the procedure). The first sidelink relay 1003 and/or the second sidelink relay 1004 may broadcast the direct communication request message without the relay indication. The first sidelink relay 1003 and/or the second sidelink relay 1004 may include identification information about the first UE 1001, identification information about the second UE 1002, and/or identification information thereabout in the direct communication request message without the relay indication message.

According to an embodiment, in operation 1013, the second UE 1002 may receive the direct communication requests from the first sidelink relay 1003 and the second sidelink relay 1004. When the second UE 1002 is within a range in which the second UE 1002 is able to communicate with the first UE 1001, the second UE 1002 may directly receive the direct communication request message from the first UE 1001. For example, the first sidelink relay 1003 and/or the second sidelink relay 1004 may transmit the DCR message to the second UE 1002.

According to an embodiment, in operation 1014, the second UE 1002 may select the first sidelink relay 1003, and reply with a direct communication accept message through the first sidelink relay 1003 (direct communication accept). When the second UE 1002 receives the direct communication request from the first UE 1001, the second UE 1002 may select setup of a direct communication link by directly transmitting a direct communication accept message to the first UE 1001. For example, the second UE 1002 may transmit a direct communication accept message.

According to an embodiment, security establishment may be performed between the first UE 1001, the second UE 1002, the first sidelink relay 1003, and/or the second sidelink relay 1004.

According to an embodiment, in operation 1015, the first UE 1001 may receive a direct communication accept message from the first sidelink relay 003. The first UE 1001 may select a path, i.e., a sidelink relay, to use to establish a communication link with the second UE 1002 according to a policy and signal strength or whether to directly set up a direct communication link with the second UE 1002 (decide with path to use).

According to an embodiment, in a layer 3 UE-to-UE relay case, the first UE 1001 and the second UE 1002 may finish setting up the communication link (IP allocation and retrieval for L3 UE-to-UE relay case) in operation 1016a.

According to an embodiment, in a layer 2 UE-to-UE relay case, a source UE and a target UE may set up an end-to-end PC5 link via a relay in operation 1016b. The first UE 1001 may transmit a unicast E2E direct communication request message to the second UE 1002 via the selected first sidelink relay 1003. The second UE 1002 may transmit a unicast E2E direct communication accept message to the first UE 1001 via the first sidelink relay 1003 (end-to-end PC5 link establishment for L2 UE-to-UE relay case).

According to various embodiments of the disclosure, various messages transmitted and/or received from a source remote UE, a target remote UE, and/or a sidelink relay may be processed as sidelink relay discovery messages.

For example, a direct communication request message with relay_indication, i.e., a DCR message with a relay discovery indication (hereinafter, a first message), transmitted by a remote UE may be processed as a sidelink relay discovery message.

For example, in addition to the DCR message with the relay discovery indication, a direct communication request message with relay UE info (e.g., a relay UE ID) (hereinafter, a second message) transmitted to a target remote UE by the sidelink relay receiving a DCR message with a relay discovery indication transmitted by a source remote UE may be processed as a sidelink relay discovery message.

For example, a direct communication accept message with relay UE info (hereinafter, a third message) transmitted by a sidelink relay providing a connection with the source remote UE, selected based on a direct communication request with relay UE info transmitted by the sidelink relay may be processed as a sidelink relay discovery message.

For example, a direct communication accept message with relay UE info (hereinafter, a fourth message) transmitted to the source remote UE by the sidelink relay receiving the direct communication accept message with the relay UE info from the target remote UE may be processed as a sidelink relay discovery message.

For example, at least one or a combination of the DCR message with the relay discovery indication (first message), the direct communication accept message with the relay UE info (second message) transmitted by the sidelink relay to the target remote UE, the direct communication accept message with the relay UE info (third message) transmitted to the sidelink relay, and the direct communication accept message with the relay UE info (fourth message) transmitted to the source remote UE may be processed as a sidelink relay discovery message.

According to an embodiment, when the direct communication request message with the relay UE info (e.g., the relay UE ID) (second message) is processed as a sidelink relay discovery message, the direct communication request message with the relay UE info (e.g., the relay UE ID) (second message) corresponds to a message transmitted before sidelink security configuration like a DCR message with a relay discovery indication, and may thus be transmitted and/or received using a sidelink signaling bearer (SL-SRB) not requiring a ciphering function or integrity protection check and verification check functions in a PDCP layer.

For example, the direct communication request message with the relay UE info may be transmitted and/or received using an SL-SRB (e.g., SL-SRB4 to which the PDCP-layer ciphering function/integrity protection check and verification check functions are not applied, SL-SRB0 to which the PDCP-layer ciphering function/integrity protection check and verification check functions are not applied, or a new SL-SRB to which the PDCP-layer ciphering function/integrity protection check and verification check functions are not applied) the same as that for the DCR message with the relay discovery indication.

According to an embodiment, when the communication accept message with the relay UE info is processed as a sidelink relay discovery message, in case that there is no need to apply the PDCP-layer ciphering function/integrity protection check and verification check functions to the communication accept message with the relay UE info, the communication accept message with the relay UE info may be transmitted and received using a sidelink signaling bearer (SL-SRB) not requiring the ciphering function or integrity protection check and verification check functions in the PDCP layer.

For example, the direct communication accept message with the relay UE info may be transmitted and/or received using an SL-SRB (e.g., SL-SRB4 to which the PDCP-layer ciphering function/integrity protection check and verification check functions are not applied, SL-SRB0 to which the PDCP-layer ciphering function/integrity protection check and verification check functions are not applied, or a new SL-SRB to which the PDCP-layer ciphering function/integrity protection check and verification check functions are not applied) the same as that for the DCR message with the relay discovery indication.

According to an embodiment, when the communication accept message with the relay UE info is processed as a sidelink relay discovery message, the transmission time of the communication accept message with relay UE info may be after a security establishment procedure for a unicast sidelink between the sidelink relay and the target remote UE is completed or after a security establishment procedure for a unicast sidelink between the sidelink relay and the source remote UE is completed. Accordingly, the PDCP-layer ciphering function/integrity protection check and verification check functions may be applied to the communication accept message with the relay UE info according to a security configuration. Therefore, the communication accept message with the relay UE info may be transmitted and/or received using a sidelink signaling bearer (SL-SRB) to which the ciphering function or the integrity protection check and verification check function are applicable in the PDCP layer.

For example, the direct communication accept message with the relay UE info may be transmitted and/or received using SL-SRB2 configured to apply the PDCP-layer ciphering function/integrity protection check and verification check functions, SL-SRB4 configured to apply the PDCP-layer ciphering function/integrity protection check and verification check functions, or a new SL-SRB configured to apply the PDCP-layer ciphering function/integrity protection check and verification check functions.

According to an embodiment, SL-SRB2 may be defined as in Table 4. Table 4 may illustrate parameters specified for unicast in NR sidelink communication used for a sidelink signaling radio bearer of s protected PC5-S messages excluding Direct Link Security Mode Complete and ProSe Direct Link Security Mode Complete. An SL-SRB using an SCCH configuration related to Table 4 may be referred to or named as SL-SRB2.

**[Table 4]**

| **Name** | **Value** | **Semantics description** | **Ver** |
|---|---|---|---|
| PDCP configuration | | | |
| *>t-Reordering* | Undefined | Selected by the receiving UE, up to UE implementation | |
| *>pdcp-SN-Size* | 12 | | |
| RLC configuration | | AM RLC | |
| *>sn-FieldLength* | 12 | | |
| *>t-Reassembly* | Undefined | Selected by the receiving UE, up to UE implementation | |
| *>t-PollRetransmit* | Undefined | Selected by the transmitting UE, up to UE implementation | |
| *>pollPDU* | Undefined | Selected by the transmitting UE, up to UE implementation | |
| *>pollByte* | Undefined | Selected by the transmitting UE, up to UE implementation | |
| *>maxRetxThreshold* | Undefined | Selected by the transmitting UE, up to UE implementation | |
| *>t-StatusProhibit* | Undefined | Selected by the receiving UE, up to UE implementation | |
| *>logicalChannelIdentity* | 2 | | |
| MAC configuration | | | |
| *>priority* | 1 | | |
| *>prioritisedBitRate* | infinity | | |
| *>logicalChannelGroup* | 0 | | |
| *>schedulingRequestId* | 0 | The scheduling request configuration with this value is applicable for this SCCH if configured by the network. | |
| *>sl-HARQ-FeedbackEnabled* | Undefined | Selected by the transmitting UE, up to UE implementation | |

According to an embodiment, when the direct communication request message with the relay UE info (e.g., the relay UE ID) and/or the direct communication accept message with the relay UE info are processed as a sidelink relay discovery message in addition to the direct communication request message with relay_indication, i.e., the DCR message with the relay discovery indication, a PDCP layer and/or an RRC layer of a transmitting UE (e.g., the sidelink relay or remote UE) may receive indication information for distinguishing whether a message received to an upper layer (e.g., a ProSe layer, a V2X layer, or a PC5-S layer) is a sidelink relay discovery message or a general sidelink unicast link establishment message from the upper layer. The PDCP layer and/or the RRC layer of the transmitting UE (e.g., the sidelink relay or remote terminal) may select a corresponding SL-SRB for the sidelink relay discovery message, based on the indication information.

According to an embodiment, when the direct communication request message with the relay UE info (e.g., the relay UE ID) and/or the direct communication accept message with the relay UE info are processed as a sidelink relay discovery message in addition to the direct communication request message with relay_indication, i.e., the DCR message with the relay discovery indication, a PDCP layer of a receiving UE (sidelink relay or remote UE) may forward indication information for distinguishing whether the sidelink relay discovery message is a sidelink relay discovery message or a general sidelink unicast link establishment message to an upper layer (e.g., a ProSe layer, a V2X layer, or a PC5-S layer) while forwarding the sidelink relay discovery message to the upper layer.

According to an embodiment, when the direct communication request message with the relay UE info (e.g., the relay UE ID) and/or the direct communication accept message with the relay UE info are processed as a sidelink relay discovery message in addition to the direct communication request message with relay_indication, i.e., the DCR message with the relay discovery indication, in case that a dedicated resource pool for a sidelink discovery message is configured, the sidelink relay discovery message may be transmitted through a resource allocated from the dedicated resource pool for the sidelink discovery message. When there is no dedicated resource pool configured for a sidelink discovery message, the sidelink relay discovery message may be transmitted through a resource allocated from a resource pool configured for a general sidelink message.

An operating method of a sidelink relay in a wireless communication system according to various embodiments of the disclosure may include: configuring a first relay discovery message indicating a sidelink relay capable of relaying data between a remote UE and another remote UE and transmitting the first relay discovery message through a radio bearer configured for a relay discovery message between UEs; and receiving a second relay discovery message for discovering the sidelink relay between the UEs capable of relaying the data with the other remote UE from the remote UE through the radio bearer configured for the sidelink relay discovery message and determining the second relay discovery message.

An operating method of a remote UE in a wireless communication system according to various embodiments of the disclosure may include: receiving a first relay discovery message indicating a sidelink relay capable of relaying data between a remote UE and another remote UE from the sidelink relay through a radio bearer configured for a sidelink relay discovery message and determining the first relay discovery message; and configuring a second relay discovery message for discovering the sidelink relay capable of relaying the data with the other remote UE and transmitting the second relay discovery message through the radio bearer configured for the sidelink relay discovery message.

A sidelink relay in a wireless communication system according to various embodiments of the disclosure includes a communication unit and a controller. The controller may perform control to configure and transmit a first relay discovery message for a sidelink relay capable of relaying data between a remote UE and another remote UE, and may perform control to receive and determine a second relay discovery message for the sidelink relay capable of relaying the data between the remote UE and the other remote UE. A remote UE in a wireless communication system according to an embodiment of the disclosure includes a communication unit and a controller. The controller may perform control to receive and determine a first relay discovery message for a sidelink relay capable of relaying data between a remote UE and another remote UE, and may perform control to configure and transmit a second relay discovery message for the sidelink relay capable of relaying the data between the remote UE and the other remote UE.

According to an embodiment, a method performed by a first user equipment (UE) in a wireless communication system may include transmitting a first message for discovering a UE-to-UE (U2U) sidelink relay for sidelink communication between the first UE and a second UE through a signaling radio bearer (SRB), receiving a second message as a response to the first message from the U2U sidelink relay, and establishing a sidelink connection with the second UE through the U2U sidelink relay, based on the second message.

According to an embodiment, when the first message is a PC5 discovery message, the SRB may include sidelink signaling radio bearer 4 (SL-SRB 4).

According to an embodiment, when the first message is a direct connection request (DCR) message including an indication indicating discovery of the U2U sidelink relay, the SRB may include sidelink signaling radio bearer 0 (SL-SRB 0). The second message may be received from the U2U sidelink relay through SL-SRB 2.

According to an embodiment, a layer-2 identifier (ID) included in the first message may be different from a layer-2 ID included in the DCR message for a direct connection request.

According to an embodiment, a first user equipment (UE) in a wireless communication system may include a transceiver and a controller coupled with the transceiver. The controller may be configured to transmit a first message for discovering a UE-to-UE (U2U) sidelink relay for sidelink communication between the first UE and a second UE through a signaling radio bearer (SRB), receive a second message as a response to the first message from the U2U sidelink relay, and establish a sidelink connection with the second UE through the U2U sidelink relay, based on the second message.

According to an embodiment, when the first message is a PC5 discovery message, the SRB may include sidelink signaling radio bearer 4 (SL-SRB 4).

According to an embodiment, when the first message is a direct connection request (DCR) message including an indication indicating discovery of the U2U sidelink relay, the SRB may include sidelink signaling radio bearer 0 (SL-SRB 0). The second message may be received from the U2U sidelink relay through SL-SRB 2.

According to an embodiment, a layer-2 identifier (ID) included in the first message may be different from a layer-2 ID included in the DCR message for a direct connection request.

According to an embodiment, a method performed by a user equipment (UE)-to-UE (U2U) sidelink relay in a wireless communication system may include receiving a first message for discovering the U2U sidelink relay for sidelink communication between a first UE and a second UE through a signaling radio bearer (SRB), transmitting a second message as a response to the first message from the first UE, and relaying the sidelink communication between the first UE and the second UE, based on the second message.

According to an embodiment, when the first message is a PC5 discovery message, the SRB may include sidelink signaling radio bearer 4 (SL-SRB 4).

According to an embodiment, when the first message is a direct connection request (DCR) message including an indication indicating discovery of the U2U sidelink relay, the SRB may include sidelink signaling radio bearer 0 (SL-SRB 0). The second message may be transmitted to the first UE through SL-SRB 2.

According to an embodiment, a layer-2 identifier (ID) included in the first message may be different from a layer-2 ID included in the DCR message for a direct connection request.

According to an embodiment, a user equipment (UE)-to-UE (U2U) sidelink relay in a wireless communication system may include a transceiver and a controller coupled with the transceiver. The controller may be configured to receive a first message for discovering the U2U sidelink relay for sidelink communication between a first UE and a second UE through a signaling radio bearer (SRB), transmit a second message as a response to the first message from the first UE, and relay the sidelink communication between the first UE and the second UE, based on the second message.

According to an embodiment, when the first message is a PC5 discovery message, the SRB may include sidelink signaling radio bearer 4 (SL-SRB 4).

According to an embodiment, when the first message is a direct connection request (DCR) message including an indication indicating discovery of the U2U sidelink relay, the SRB may include sidelink signaling radio bearer 0 (SL-SRB 0). The second message may be transmitted to the first UE through SL-SRB 2.

Methods disclosed in the claims and/or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in nonvolatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

## Claims

1. A method performed by a first user equipment (UE) in a wireless communication system, the method comprising:
transmitting a first message for discovering a UE-to-UE (U2U) sidelink relay for sidelink communication between the first UE and a second UE via a signaling radio bearer (SRB);
receiving, from the U2U sidelink relay, a second message as a response to the first message; and
establishing a sidelink connection with the second UE via the U2U sidelink relay, based on the second message.

2. The method of claim 1, wherein, in case that the first message is a PC5 discovery message, the SRB comprises sidelink signaling radio bearer 4 (SL-SRB 4).

3. The method of claim 1, wherein, in case that the first message is a direct connection request (DCR) message comprising an indication indicating discovery of the U2U sidelink relay, the SRB comprises sidelink signaling radio bearer 0 (SL-SRB 0), and
wherein the second message is received from the U2U sidelink relay via SL-SRB 2.

4. The method of claim 3, wherein a layer-2 identifier (ID) included in the first message is different from a layer-2 ID included in a DCR message for a direct connection request.

5. A first user equipment (UE) in a wireless communication system, the first UE comprising:
a transceiver; and
a controller coupled with the transceiver,
wherein the controller is configured to:
transmit a first message for discovering a UE-to-UE (U2U) sidelink relay for sidelink communication between the first UE and a second UE via a signaling radio bearer (SRB);
receive, from the U2U sidelink relay, a second message as a response to the first message; and
establish a sidelink connection with the second UE via the U2U sidelink relay, based on the second message.

6. The first UE of claim 5, wherein, in case that the first message is a PC5 discovery message, the SRB comprises sidelink signaling radio bearer 4 (SL-SRB 4).

7. The first UE of claim 5, wherein, in case that the first message is a direct connection request (DCR) message comprising an indication indicating discovery of the U2U sidelink relay, the SRB comprises sidelink signaling radio bearer 0 (SL-SRB 0), and
wherein the second message is received from the U2U sidelink relay via SL-SRB 2.

8. The first UE of claim 7, wherein a layer-2 identifier (ID) included in the first message is different from a layer-2 ID included in a DCR message for a direct connection request.

9. A method performed by a user equipment (UE)-to-UE (U2U) sidelink relay in a wireless communication system, the method comprising:
receiving a first message for discovering the U2U sidelink relay for sidelink communication between a first UE and a second UE via a signaling radio bearer (SRB);
transmitting a second message as a response to the first message from the first UE; and
relaying the sidelink communication between the first UE and the second UE, based on the second message.

10. The method of claim 9, wherein, in case that the first message is a PC5 discovery message, the SRB comprises sidelink signaling radio bearer 4 (SL-SRB 4).

11. The method of claim 9, wherein, in case that the first message is a direct connection request (DCR) message comprising an indication indicating discovery of the U2U sidelink relay, the SRB comprises sidelink signaling radio bearer 0 (SL-SRB 0), and
wherein the second message is transmitted to the first UE via SL-SRB 2.

12. The method of claim 11, wherein a layer-2 identifier (ID) included in the first message is different from a layer-2 ID included in a DCR message for a direct connection request.

13. A user equipment (UE)-to-UE (U2U) sidelink relay in a wireless communication system, the U2U sidelink relay comprising:
a transceiver; and
a controller coupled with the transceiver,
wherein the controller is configured to:
receive a first message for discovering the U2U sidelink relay for sidelink communication between a first UE and a second UE via a signaling radio bearer (SRB);
transmit a second message as a response to the first message from the first UE; and
relay the sidelink communication between the first UE and the second UE, based on the second message.

14. The U2U sidelink relay of claim 13, wherein, in case that the first message is a PC5 discovery message, the SRB comprises sidelink signaling radio bearer 4 (SL-SRB 4).

15. The U2U sidelink relay of claim 13, wherein, in case that the first message is a direct connection request (DCR) message comprising an indication indicating discovery of the U2U sidelink relay, the SRB comprises sidelink signaling radio bearer 0 (SL-SRB 0), and
wherein the second message is transmitted to the first UE via SL-SRB 2.
